# EUROPEAN PATENT SPECIFICATION

(11) **EP 2 564 988 B1**
(45) Date of publication and mention of the grant of the patent: **21.12.2016**
(21) Application number: 12189385.3
(22) Date of filing: 24.06.2004
(51) Int. Cl.: B25F 1/00, B25H 1/00, B21J 15/10, B23Q 9/00

(54) **Methods and apparatus for manufacturing operations**
Verfahren und Vorrichtung für Herstellungsoperationen
Procédés et appareil pour les opérations de fabrication

(30) Priority: 25.06.2003 US 606402; 25.06.2003 US 606443; 25.06.2003 US 606472; 25.06.2003 US 606473; 25.06.2003 US 606625
(43) Date of publication of application: 06.03.2013
(62) Divisional of application: 04756107.1
(73) Proprietor: The Boeing Company, Chicago, IL 60606-1596 (US)
(72) Inventor: Buttrick Jr., James M., NE, Seattle, 98115 (US); Boyl-Davis, Theodore M., SE, Snohomish, 98201 (US); Gage, Roger M., NE, Marysville,, 98270 (US); Jones, Darrell D, Mill Creek, 98012-5904 (US); Arntson, Paul R., SE Bothel,, 98021 (US); Outous, Ronald W., NE Shoreline, 98155 (US); Wallace, Lyle M., Pl., Kent, 98031 (US)
(74) Representative: Witte, Weller & Partner Patentanwälte mbB

(56) References cited:
- WO-A2-03/049899
- US-A- 3 627 436
- US-A- 4 268 949
- US-A- 5 468 099
- US-A- 5 697 413
- US-B1- 6 240 332

## Description

### FIELD OF THE INVENTION

The present disclosure relates to methods and apparatus for improved manufacturing operations, and more specifically, to methods and apparatus for performing counterbalance-assisted manufacturing operations, opposing-force support systems, neutral-axis rack systems, non-contact position sensing systems, and servo-controlled manufacturing operations.

### BACKGROUND OF THE INVENTION

The fabrication of large structures may involve the performance of large numbers of manufacturing operations, such as the drilling of a large number of holes in the components of the structure. Conventional structures that require a large number of drilling operations include, for example, aircraft, missiles, ships, railcars, sheet metal buildings, and other similar structures. In particular, conventional aircraft fabrication processes typically involve the drilling of a large number of holes in wing sections of the aircraft to allow these sections to be attached to each other and to the airframe with fasteners (*e.g.* rivets). Other types of manufacturing operations that may be involved in the construction of structures include riveting, cutting, welding, sanding, measuring and inspecting operations.

A variety of devices have been developed to facilitate drilling operations involving the drilling of a large number of holes. For example, U.S. Patent No. 4,850,763 issued to Jack et al. discloses a drilling system that includes a pair of rails temporarily attached to an aircraft fuselage. A support carriage is slideably coupled to the rails and supports a drill assembly. A template attached to the aircraft fuselage provides an index of the desired locations of the holes that are to be formed in the aircraft fuselage. As the carriage is moved along the rails, a locking mechanism (or trigger) interacts with the template to securely position the carriage for a subsequent drilling operation.

Although desirable results have been achieved using the prior art drilling systems, some disadvantages have been noted. The drill assemblies that are conventionally used for such operations typically weigh approximately twenty pounds, and may be relatively bulky and awkward to handle. These attributes may lead to operator fatigue, and may reduce the efficiency of the fabrication process. Furthermore, the weight and bulk of the drill assembly may cause the supporting assembly of the rails and the carriage to sag, twist, or bend, depending on the orientation of the fuselage section under work, which may result in inaccuracies or misalignment of the resulting holes.

In addition, the performance of prior art drill assemblies may be reduced when operating on relatively lighter, more flexible structures. In such cases, drill thrust may become too high and may cause undesirable bending or structural deflection of the workpiece, which may in turn result in reduced hole quality. Also, on such relatively light, flexible structures, the forces applied by the drilling system on the structure may require careful control to avoid overexertion against the structure. This may slow the manufacturing operation and reduce throughput.

Furthermore, the ability to accurately position a manufacturing tool over a workpiece may be compromised when the structure is contoured. This is particularly true when the structure is a complex contoured structure that is curved in multiple planes of curvature. Because position accuracy may be reduced, manufacturing operations on such structures may require increased delays due to a need for increased checking and adjusting of the position of the manufacturing tool, and may also require additional repairs and reworking of the workpiece due to inaccuracies in the manufacturing operations.

Prior art manufacturing assemblies typically need to be carefully oriented on the workpiece prior to performing manufacturing operations to ensure that the manufacturing operations are performed in the proper locations. Orienting the prior art assemblies on the workpiece may require physical contacts between the support carriage or other portions of the assembly and one or more contact points on the workpiece. Such physical contacts may be subject to degradation, especially through repeated usage, and may also adversely impact the quality of some types of workpiece surfaces.

Furthermore, prior art manufacturing assemblies typically include a controller that is positioned remotely from the support carriage that supports a tool assembly over the workpiece, as disclosed, for example, in U.S. Patent No. 6,550,129 B1 issued to Buttrick and U.S. Patent No. 6,073,326 issued to Banks et al.. In such systems, control signals for commanding movement of the support carriage and for controlling manufacturing operations using the tool assembly are transmitted via a system of control cables that extend between the remotely-positioned controller and the components of the support carriage and the tool assembly. Although desirable results have been achieved using such manufacturing assemblies, the extent of movement of the support carriage and the operation of the tool assembly may be limited by the lengths of the control cables or by the mobility of the controller within the confines of the manufacturing environment.

In addition, prior art manufacturing tools may be undesirably heavy, particularly pneumatically-driven tools and other tools assembled from conventional components having individual housings and support bearings. At least some conventional pneumatically-driven tools do not provide precise controllability for performing manufacturing operations. Some pneumatic drill assemblies, for example, do not allow precise control of drill feed rate or rotational speed.

US 5,697,413 describes a three-axis router drive mechanism comprising a support frame; first, second and third motorized slide assemblies slidably assembled to said support frame and the third one coupled to the first and second slide assembly, each including a movable carriage and a corresponding drive motor; and a motorized router slide assembly attached to said third motorized slide assembly carriage and including a movable carriage for receipt of a router.

In US 5,468,099 a seam tracking robotic drilling machine is described. The machine includes a support frame which mounts a platform for rotation about an axis perpendicular the panels to be drilled. The platform supports a carriage for movement along an axis parallel the surface of the panels and in the direction of the seam while the carriage supports an inner carriage for movement along axis perpendicular thereto. A drill head is mounted on the inner carriage. A series of variable height vacuum cup assemblies support the support frame and the inner carriage.

US 4,268,949 shows a tracing milling machine having a conventional tracing milling machine controller for controlling a servo movement of the machine and a novel tracing command controller for automatically generating tracing commands to be supplied to the tracing milling machine controller for the purpose of enhancing automation of the tracing milling operation of the machine.

WO 03/049899 A2 describes a flexible track drilling machine with a support of flexible bendable rails.

For the foregoing reasons, an unmet need exists for improved apparatus and methods for performing manufacturing operations.

### SUMMARY OF THE INVENTION

The present invention is directed to methods and apparatus for improved manufacturing operations.

An apparatus for supporting a tool relative to a surface of a workpiece includes a base adapted to be attached to the workpiece, a tool support coupled to the base, and a biasing device coupled to both the base and the tool support. The tool support is moveable relative to the base along a translation axis, and the biasing device is biasable along a biasing axis that is at least partially along the translation axis. The biasing device is adapted to at least partially counterbalance a force (*e.g.* a gravitational force) exerted on the tool support along the translation axis. As described more fully below, apparatus and methods may advantageously reduce the amount of fatigue experienced by an operator of a manufacturing tool, and may improve the efficiency and accuracy of the manufacturing operations performed with the manufacturing tool.

An apparatus for supporting a manufacturing tool relative to a workpiece includes a track assembly adapted to be attached to the workpiece, and a carriage moveably coupled to the track assembly. The carriage includes a tool support adapted to receive and support a manufacturing tool. An opposing-force support assembly is operatively coupled to the carriage and is adapted to be secured to the workpiece. The opposing-force support assembly at least partially counterbalances a manufacturing force exerted on the workpiece by the manufacturing tool. Deflections of a workpiece during a manufacturing operation may be reduced, thereby improving the accuracy, consistency, efficiency, and throughput of the manufacturing operation.

An apparatus for supporting a manufacturing tool relative to a workpiece includes a track assembly adapted to be attached to the workpiece and including at least one rail, the rail having a longitudinally-extending neutral axis and a rack extending along a pitch line that at least approximately coincides with the longitudinally-extending neutral axis. The rack includes a plurality of wedge-shaped apertures or a plurality of conically-shaped apertures. Improvements in position control of a manufacturing tool may be achieved, thereby improving the accuracy, consistency, efficiency, and throughput of the manufacturing operation.

Aapparatus for performing a manufacturing operation on a workpiece includes a track assembly adapted to be attached to the workpiece, a carriage assembly moveably coupled to the track assembly and moveable relative to the workpiece, and a position sensor. The position sensor is operatively coupled to the carriage assembly and includes a sensor element adapted to be operatively positioned relative to the workpiece. The sensor element is further adapted to detect at least one edge of an index feature on the workpiece from a distance away from the index feature. Because the sensor element detects an edge of the index feature from a distance away from the index feature, the sensor element advantageously does not physically contact the index feature, and may therefore provide improved reliability and maintainability in comparison with prior art systems.

An apparatus for performing a manufacturing operation on a workpiece includes a track assembly adapted to be attached to the workpiece, a carriage assembly moveably coupled to the track assembly and moveable relative to the workpiece, and a position sensor operatively coupled to the carriage assembly. The position sensor includes a sensor element adapted to be operatively positioned relative to the workpiece, and a sensing circuit having a first portion coupled to the sensing element, the first portion being adapted to receive an analog input signal and provide a conditioned analog output signal on a first output node. The sensing circuit further includes a second portion coupled to the first portion and adapted to receive the conditioned analog output signal and to provide a digital output signal on a second output node. Thus, the sensor element advantageously provides both analog and digital output signals to the relevant controller apparatus, thereby improving the versatility and accuracy of the manufacturing system.

An apparatus for performing a manufacturing operation on a workpiece including a track assembly adapted to be attached to the workpiece, a carriage assembly moveably coupled to the track assembly and including a drive assembly operable to translate the carriage assembly along the track assembly, and a controller mounted on the carriage assembly and operatively coupled to the drive assembly. The controller is adapted to transmit control signals to the drive assembly to control movement of the carriage assembly over the workpiece. Because the controller is mounted on the carriage assembly, the carriage assembly may operate autonomously to perform manufacturing operations on the workpiece, and the amount of support equipment may be reduced.

In an embodiment of the invention, an apparatus for performing a manufacturing operation on a workpiece includes a base member, a drive platform spaced apart from the base member by a separation distance, and a plurality of guide members extending between the drive platform and the base member. At least one of the drive platform and the base member are moveable along the guide members to increase or decrease the separation distance. The apparatus also includes a drive member operatively coupled between the drive platform and the base member, and a servo motor operatively coupled to the drive member. A tool assembly is coupled to the drive platform. The drive platform includes a first annular portion and the base member includes a second annular portion, the first and second annular portions being aligned along an axis and the plurality of guide members and the at least one drive member being concentrically spaced about the first and second annular portions, and wherein the tool assembly extends through the first and second annular portions along the axis. As the servo motor drives the drive member, the separation distance is varied. In an alternate embodiment, a manufacturing tool may be coupled to at least one of the drive platform and the base member, and as the motor drives the drive member, the manufacturing tool is engaged with the workpiece. Again, as described more fully below, apparatus and methods in accordance with the present invention may advantageously improve the accuracy, efficiency, and throughput of manufacturing operations on a workpiece.

### BRIEF DESCRIPTION OF THE DRAWINGS

The preferred and alternative embodiments of the present invention are described in detail below with reference to the following drawings.
FIGURE 1 is an isometric view of a support assembly for performing manufacturing operations on a workpiece in accordance with an embodiment of the invention;
FIGURE 2 is an isometric view of the support assembly of FIGURE 1 coupled with a drill assembly in accordance with an embodiment of the invention;
FIGURE 3 is a side elevational view of the support assembly and drill assembly of FIGURE 2;
FIGURE 4 is an isometric view of a carriage assembly being engaged with the track assembly of FIGURE 1;
FIGURE 5 is an isometric view of the carriage assembly being secured to the track assembly of FIGURE 1;
FIGURE 6 is an isometric view of the counterbalance assembly of FIGURE 1 in a first biasing position;
FIGURE 7 is an isometric view of the counterbalance assembly of FIGURE 1 in a second biasing position;
FIGURE 8 is an isometric view of a drill assembly being coupled with the counterbalance assembly of FIGURE 1;
FIGURE 9 is an isometric view of an alternate embodiment of a track assembly and a carriage assembly for use with a support assembly in accordance with another embodiment of the invention;
FIGURE 10 is an enlarged, partial isometric top view of the track assembly and a portion of the carriage assembly of FIGURE 9;
FIGURE 11 is an enlarged, partial isometric bottom view of the track assembly and a portion of the carriage assembly of FIGURE 9;
FIGURE 12 is an isometric view of a manufacturing assembly for performing manufacturing operations on a workpiece in accordance with yet another embodiment of the invention;
FIGURE 13 is an isometric view of the manufacturing assembly of FIGURE 12 engaged with a contoured workpiece in accordance with an alternate embodiment of the invention;
FIGURE 14 is a front isometric view of a manufacturing assembly having an opposing-force support assembly for performing manufacturing operations on a workpiece in accordance with an embodiment of the invention;
FIGURE 15 is a rear isometric view of the manufacturing assembly of FIGURE 14;
FIGURE 16 is a lower isometric view of the manufacturing assembly of FIGURE 14;
FIGURE 17 is an enlarged, front isometric view of the opposing-force support assembly of the manufacturing assembly of FIGURE 14;
FIGURE 18 is an enlarged, rear isometric view of the opposing-force support assembly of the manufacturing assembly of FIGURE 14;
FIGURE 19 is an enlarged upper isometric view of a first drive gear engaged with the integrally-formed rack of the rail of FIGURE 14;
FIGURE 20 is an enlarged partial isometric view of a rail of the track assembly of FIGURE 14;
FIGURE 21 is an enlarged, top elevational partial view of the rail of FIGURE 14;
FIGURE 22 is an enlarged, side cross-sectional view of a portion of the rail taken along line A-A of FIGURE 21;
FIGURE 23 is a front elevational view of a manufacturing assembly having a position sensor assembly in accordance with an embodiment of the invention;
FIGURE 24 is an upper isometric view of a track assembly and a carriage assembly of the manufacturing assembly of FIGURE 23;
FIGURE 25 is an enlarged, partial isometric view of a sensor assembly and control assembly of the manufacturing assembly of FIGURE 23;
FIGURE 26 is a side isometric view of a sensor of the sensor assembly of FIGURE 25;
FIGURE 27 is a bottom isometric view of the sensor of FIGURE 26;
FIGURE 28 is a flowchart of a method of position determination in accordance with an embodiment of the invention;
FIGURE 29 is a schematic representation of the method of position determination of FIGURE 28;
FIGURE 30 is a graph of a representative signal level of a sensor sweep used to detect a position of an index feature in accordance with an embodiment of the invention;
FIGURE 31 is a control circuit for performing a position determination in accordance with another alternate embodiment of the invention;
FIGURE 32 is a schematic representation of a manufacturing assembly in accordance with yet another embodiment of the invention;
FIGURE 33 is an enlarged, front elevational view of a servo-controlled tool assembly of the manufacturing assembly of FIGURE 24;
FIGURE 34 is a partially-exposed top elevational view of the servo-controlled tool assembly of FIGURE 33; and
FIGURE 35 is a side elevational view of the servo-controlled tool assembly of FIGURE 33.

### DETAILED DESCRIPTION OF THE INVENTION

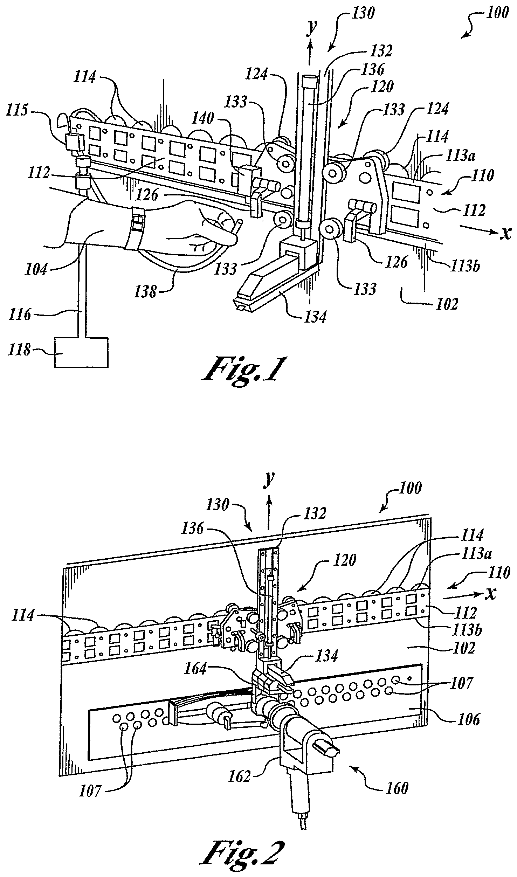

The present invention relates to methods and apparatus for improved manufacturing operations, and more specifically, to methods and apparatus for performing counterbalanced drilling operations on aircraft fuselage sections. Many specific details of certain embodiments of the invention are set forth in the following description and in FIGURES 1-35 to provide a thorough understanding of such embodiments. One skilled in the art, however, will understand that the present invention may have additional embodiments, or that the present invention may be practiced without several of the details described in the following description.

### Counterbalance-Assisted Manufacturing Operations

FIGURE 1 is an isometric view a support assembly 100 for performing manufacturing operations on a workpiece 102 in accordance with an embodiment of the invention. In this embodiment, the support assembly 100 includes an elongated track assembly 110 attachable to the workpiece 102, a carriage assembly 120 moveably coupled to the track assembly 110, and a counterbalance assembly 130 coupled to the carriage assembly 120. As described more fully below, because the support assembly 100 having the counterbalance assembly 130 may advantageously reduce the loads borne by an operator 104 (partially visible) during a manufacturing operation, the support assembly 100 may reduce operator fatigue, and may improve the efficiency and quality of the manufacturing operation.

As shown in FIGURE 1, the track assembly 110 includes a beam 112 equipped with a plurality of vacuum cup assemblies 114. The vacuum cup assemblies 114 are fluidly coupled to a vacuum line 116 leading to a vacuum source 118, such as a vacuum pump or the like. A vacuum control valve 115 is coupled between the vacuum line 116 and the vacuum cup assemblies 114 and allows vacuum to be controllably removed or applied to the vacuum cup assemblies 114 during, for example, mounting and removal of the track assembly 110 to and from the workpiece 102. The vacuum cup assemblies 114 are of known construction and may be of the type disclosed, for example, in U.S. Patent No. 6,467,385 B1 issued to Buttrick et al., or U.S. Patent No. 6,210,084 B1 issued to Banks et al.. In alternate embodiments, the vacuum cup assemblies 114 may be replaced with other types of attachment assemblies, including magnetic attachment assemblies, bolts or other threaded attachment members, or any other suitable attachment assemblies. In some embodiments, the beam 112 of the track assembly 110 may be relatively rigid and inflexible, and in other embodiments, the beam 112 may be a flexible or partially-flexible beam that may be bent and twisted to conform to the surface contours of the workpiece 102, as described more fully below.

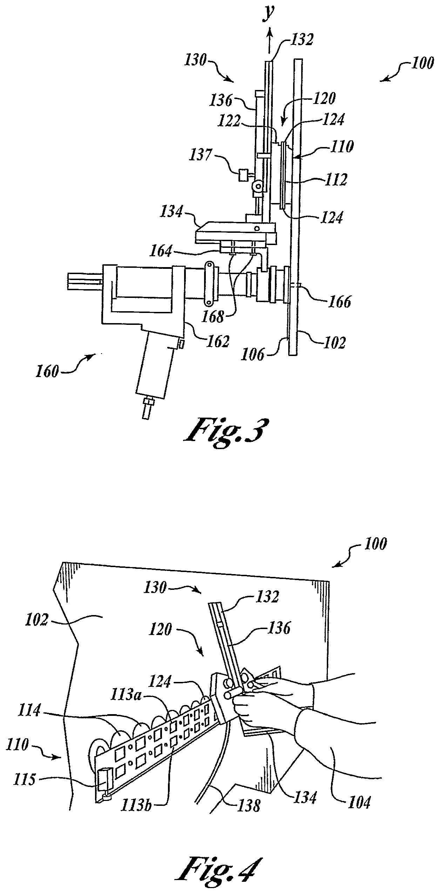

The carriage assembly 120 shown in FIGURE 1 includes a base member 122 having a plurality of carriage bearings 124 that rollably engage upper and lower edges 113a, 113b of the beam 112. Thus, the carriage assembly 120 may translate back and forth along the length of the beam 112 along an x-axis. In alternate embodiments, the carriage bearings 124 may be replaced with rollers, gears, slide members, rubber wheels, or other suitable coupling devices. In a particular embodiment, the carriage bearings 124 may be replaced with pinion gears that engage with a toothed rack portion (e.g. positioned on the upper edge 113a) of the beam 112. The carriage assembly 120 further includes a pair of locking mechanisms 126 attached to the base member 122 and engageable with the beam 112 of the track assembly 110. In this embodiment, the locking mechanisms 126 are hingeably coupled to the base member 122 and may extend through the base member 126 into a securing engagement with the beam 112, leaving the carriage assembly 120 free to traverse along the x-axis of the beam 112, but otherwise preventing the carriage assembly 120 from becoming disengaged from the track assembly 110. A carriage lock 137 (FIGURE 3) is coupled to the base member 122 and may be engaged with the track assembly 110 to secure the carriage assembly 120 in a desired position on the track assembly 110.

With continued reference to FIGURE 1, the counterbalance assembly 130 includes an elongated rail 132 moveably coupled to the carriage assembly 120, the rail 132 being moveable along a y-axis with respect to the carriage assembly 120. In this embodiment, the rail 132 is moveably engaged with the base member 122 of the carriage assembly 120 by a plurality of rail bearings 133. In the embodiment shown in FIGURE 1, the y-axis (or tool translation axis) is perpendicular to the x-axis, and both the y-axis and the x-axis are perpendicular to a local normal to the surface of the workpiece 102. In alternate embodiments, the y-axis (and the x-axis) may be oriented at different angles with respect to the local normal to the surface of the workpiece 102, such as when the workpiece 102 has contoured surface, especially a workpiece 102 having a compound contoured surface *(i.e.* a surface that has curvature in multiple planes of curvature). It may be appreciated, however, that the y-axis of the support assembly 100 may be positioned such that the y-axis has at least a component that is perpendicular to the local normal to the surface of the workpiece 102, so that the y-axis is at least partially perpendicular to the local normal. In other words, the y-axis is preferably not aligned with the local normal to the surface of the workpiece 102.

As further shown in FIGURE 1, a tool support 134 is coupled to the rail 132 and projects outwardly therefrom. A biasing cylinder (or counterbalance device) 136 has a first portion coupled to the carriage assembly 120 and a second portion coupled to the rail 132 (or to the tool support 134). The first and second portions of the biasing cylinder 136 are moveable relative to each other. In alternate embodiments, the biasing cylinder 136 may include a pneumatic cylinder, a hydraulic cylinder, one or more spring members, or any other suitable counterbalance device. Preferably, the counterbalance device 136 is controllably biasable by a control mechanism that permits the operator to engage and disengage a biasing force applied by the counterbalance device 136, and also to control the magnitude of the biasing force. As further shown in FIGURE 1, a supply line 138 leading to a source of pressurized fluid (e.g. air or hydraulic fluid) is coupled to a counterbalance control valve 140 which controls the pressure within the biasing cylinder 136. In one embodiment, the biasing cylinder 136 is biasable in a single direction (e.g. either up or down along the y-axis) by applying pressure into the biasing cylinder 136 via the counterbalance control valve 140. Alternately, the biasing cylinder 136 may be selectively biased in both first and second directions (e.g. both up and down along the y-axis) by means of the counterbalance control valve 140. In a preferred embodiment, the counterbalance control valve 140 may be adjustable to control the biasing direction and the amount of biasing pressure within the biasing cylinder 136, which in turn controls the amount of biasing force applied by the biasing cylinder 136 on the tool support 134.

In one particular embodiment, the support assembly 100 in accordance with an embodiment of the present invention may be employed in drilling operations. For example, FIGURES 2 and 3 are isometric and side elevational views, respectively, of the support assembly 100 of FIGURE 1 coupled with a drill assembly 160 in accordance with one embodiment of the invention. In this embodiment, the drill assembly 160 includes a drilling device 162 coupled to a support bracket 164 that is, in turn, coupled to the tool support 134 of the counterbalance assembly 130. The drilling device 162 may include a clamp collet 166 that may be securely engaged into a hole in the workpiece 102. The drilling device 162 may be any known drilling device suitable for performing drilling operations on a workpiece, including, for example, those drilling devices commercially-available from Cooper Tools, Inc. of Lexington, South Carolina, West Coast Industries, Inc. of Seattle, Washington, Recoules, S.A. of Ozoir-la-Ferriere, France, and from Global Industrial Technologies, Inc. of Dallas, Texas.

In operation, the vacuum control valve 115 (FIGURE 1) may be actuated to disengage the vacuum source 118 from the vacuum assemblies 114, allowing the track assembly 110 to be positioned at a desired location on the workpiece 102. The vacuum control valve 115 may then be re-actuated to engage the vacuum source 118 with the vacuum assemblies 114, securely engaging the track assembly 110 to the workpiece 102. Next, the carriage assembly 120 may be coupled to the track assembly 110. FIGURE 4 is an isometric view of a carriage assembly 120 being engaged with the track assembly 110. As shown in FIGURE 4, the uppermost carriage bearings 124 may be positioned in contact with the upper edge 113a of the beam 112 of the track assembly 110 in a tipped or canted position, and then the carriage assembly 120 may be rotated downwardly until the lowermost carriage bearings 124 engage the lower edge 113b of the beam 112.

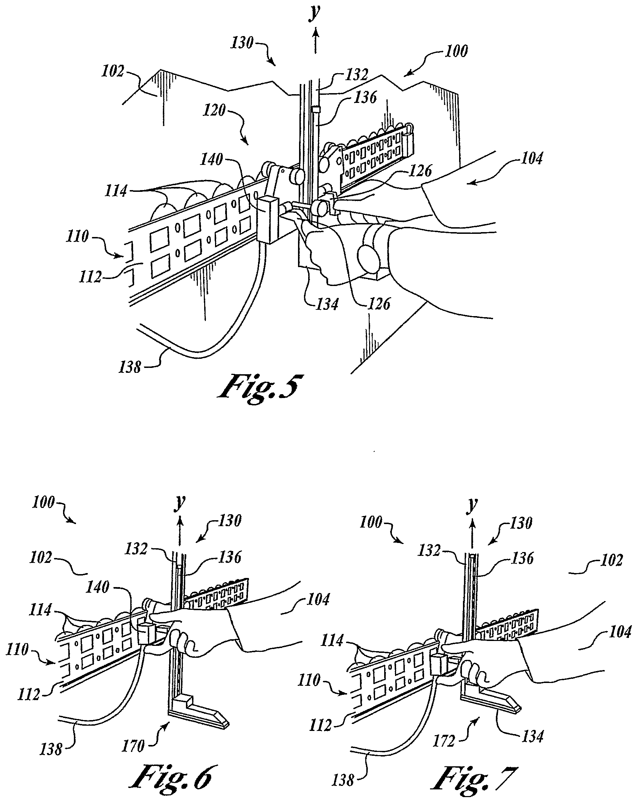

With the carriage assembly 120 positioned on the rail assembly 110, the carriage assembly 120 may be secured to the track assembly 110 such that the carriage assembly 120 may move back and forth along the x-axis of the track assembly 110, but will otherwise not become separated from the track assembly 110. FIGURE 5 is an isometric view of the carriage assembly 120 being secured to the track assembly 110 by an operator 104 by pressing the locking mechanisms 126 of the carriage assembly 120 into engagement with the beam 112 of the track assembly 110.

Next, with the supply line 138 coupled to the counterbalance control valve 140, the operator 104 may adjust a biasing pressure within the biasing cylinder 136 by actuating the counterbalance control valve 140, thereby providing a desired amount of biasing force along the y-axis. For example, FIGURE 6 is an isometric view of the counterbalance assembly 130 positioned in a first biasing position 170, and FIGURE 7 is an isometric view of the counterbalance assembly 130 positioned in a second biasing position 172. In the first biasing position 170 (FIGURE 6), the counterbalance control valve 140 is closed so that there is no biasing pressure within the biasing cylinder 136, thereby allowing gravity to drive the rail 136 and the tool support 134 downwardly with respect to the track assembly 110. Conversely, in the second biasing position 172 (FIGURE 7), the counterbalance control valve 140 is actuated to provide a biasing pressure within the biasing cylinder 136 that tends to drive the rail 136 and the tool support 134 upwardly with respect to the track assembly 110.

It will be appreciated that the biasing cylinder 136 may be used to counterbalance the weight of a tool assembly 160 mounted on the counterbalance assembly 130. In some embodiments, the tool assembly 160 may be mounted below the track assembly 110 such that the counterbalance assembly 130 tends to pull the tool assembly 160 toward the track assembly 110. In alternate embodiments, the tool assembly 160 may be mounted above the track assembly 110 so that the counterbalance assembly 130 tends to push the tool assembly 160 away from the track assembly 110.

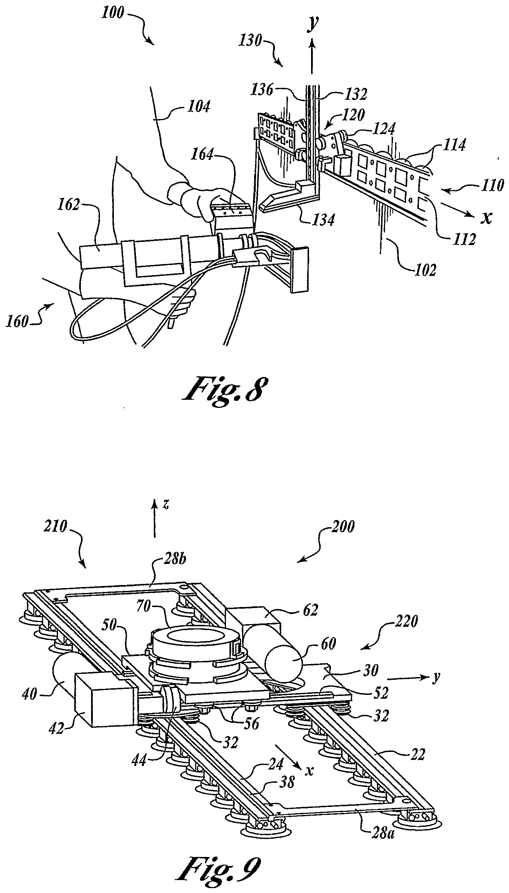

A manufacturing tool may then be coupled to the counterbalance assembly 130 for performing a manufacturing process on the workpiece 102. For example, FIGURE 8 is an isometric view of the drill assembly 160 (FIGURE 3) being coupled with the counterbalance assembly 130. Specifically, the support bracket 164 coupled to the drilling device 162 may be slideably engaged onto the tool support 134 by the operator 104, and may be secured into position by, for example, one or more locking screws 168 (FIGURE 3). In one embodiment, a hole template 106 (FIGURE 2) may be affixed to the workpiece 102 to provide a guide for where a plurality of holes 107 are to be drilled into the workpiece 102 using the drilling assembly 160.

With the drilling assembly 160 (or other manufacturing tool) secured to the counterbalance assembly 130, the operator may adjust the counterbalance control valve 140 so that the tool support 134 is biased upwardly along the y-axis (FIGURE 7), and so that the pressure within the biasing cylinder 136 counterbalances (or counteracts) a gravitational force on the drilling assembly 160. In a preferred method of operation, the biasing force exerted by the biasing cylinder 136 on the tool support 134 approximately balances the weight of the drilling assembly 160, such that the drilling assembly 160 "floats" on the support assembly 100 and may be moved along the y-axis with a relatively small amount of force applied by the operator 104. Thus, the operator 104 may position the drilling assembly 160 in a desired position along the x-axis by translating the carriage assembly 120 along the track assembly 110, and in a desired position along the y-axis by sliding the rail 136 up or down with respect to the carriage assembly 120, with relatively little effort. Of course, in alternate modes of operation, the biasing force exerted by the biasing cylinder 136 may be adjusted to be less than or greater than the weight of the drilling assembly 160 as desired.

In an alternate method of operation, the support assembly 100 may be secured to the workpiece 102, and a manufacturing tool (e.g. the drilling assembly 160) may be attached to the carriage assembly 120 of the support assembly 100. Next, the drilling assembly 160 may be securely engaged with the workpiece 102, such as, for example, by engaging the clamp collet 166 of the drill assembly 160 through a hole 107 in the workpiece 102. With the drilling assembly 160 secured to the workpiece 102, the support assembly 100 may then be disengaged from the workpiece 102 such that the support assembly 100 is supported by the drilling assembly 160 attached to the workpiece 102. The support assembly 100 may then be moved (or translated) with respect to the drilling assembly 160 to a different location on the workpiece 102, with the support assembly 100 remaining moveably coupled to the drilling assembly 160 during this portion of the process. With the support assembly 100 positioned at a new location on the workpiece 102, the support assembly 100 may be re-engaged with the workpiece 102, and the manufacturing operations with the manufacturing tool may be resumed along a new section of the workpiece 102.

In one particular embodiment, after the drilling assembly 160 (or other manufacturing tool) is secured to the workpiece 102, and with the drilling assembly 160 coupled to the counterbalance assembly 130, the counterbalance control valve 140 of the counterbalance assembly 130 may be adjusted to provide a biasing force in a direction that counterbalances the gravitational force on the support assembly 100. In this way, the counterbalance assembly 130 may be used to assist the operator 104 in the re-positioning of the support assembly 100 on the workpiece 102. In a preferred embodiment, the counterbalance assembly 130 is adjusted to approximately equal the gravitational force on the support assembly 100 so that when the support assembly 100 is disengaged from the workpiece 102 and is supported by the drilling assembly 160 secured to the workpiece 102, the support assembly 100 may be easily translated (rolled or slid) through the carriage assembly 120 similar to a carriage on a relatively-older model typewriter.

The support assembly 100 may provide significant advantages over prior art apparatus and methods for performing manufacturing operations on the workpiece 102. Because the counterbalance assembly may be adjusted to counterbalance the weight of a manufacturing tool, the operator is not required to bear the weight of the manufacturing tool while performing the manufacturing operation. The operator is therefore less likely to become fatigued during the manufacturing operation, which may improve the operator's satisfaction and comfort during performance of the manufacturing operation. Reducing the operator's fatigue may also lead to improved efficiency and improved accuracy in the performance of the manufacturing operation. Furthermore, reducing the fatigue of the operator may be especially advantageous for those manufacturing operations that require a large number of operations using the manufacturing tool on the workpiece.

The support assembly 100 may also advantageously improve the quality of the manufacturing operations by ensuring accurate, consistent positioning of the manufacturing tool with respect to the workpiece. Because the support assembly 100 supports and controls the orientation of the manufacturing tool with respect to the surface of the workpiece, the manufacturing operations may be more accurately and consistently conducted. The operator does not need to support the weight of the manufacturing tool during the manufacturing operation, but rather, may remain involved in moving the manufacturing tool to the desired location and operating the controls of the manufacturing tool to perform the desired operation. Thus, the orientation of the manufacturing tool with respect to the surface of the workpiece may be un-effected by fatigue or skill level of the operator.

Furthermore, because support assemblies in accordance with the present invention may be easily moved along the surface of the workpiece, the speed with which manufacturing operations may be performed may be increased. As noted above, with a manufacturing tool securely engaged with the workpiece, the support assembly 100 may be detached from the workpiece and may be moveably translated relative to the manufacturing tool to a new location on the workpiece. At the new location, the support assembly may be re-engaged with the workpiece, and the manufacturing operations may be permitted to continue. The counterbalance assembly may be used to facilitate this process by providing a biasing force that counterbalances the weight of the support assembly, thereby assisting the operator with translation of the support assembly to the new location. Thus, the apparatus and methods in accordance with the present invention may provide yet another improvement in the efficiency of manufacturing operations.

It may be appreciated that support assemblies in accordance with the present invention, including the particular embodiment of the support assembly 100 described above, may be used to provide counterbalancing support to a wide variety of manufacturing tools, and that the teachings of the present invention are not limited to manufacturing operations that involve drilling. For example, support assemblies in accordance with the present invention may be used to support riveters, mechanical and electromagnetic dent pullers, welders, wrenches, clamps, sanders, nailers, screw guns, or virtually any other desired type of manufacturing tools or measuring instruments.

It may also be appreciated that a variety of alternate embodiments of apparatus and methods may be conceived in accordance with the present invention, and that the invention is not limited to the particular apparatus and methods described above and shown in the accompanying figures. For example, it may be noted that the track assembly 110 and the carriage assembly 120 may be eliminated, and that the counterbalance assembly 130 may simply be secured directly to the workpiece 102 by one or more attachment assemblies (e.g. vacuum cup assemblies 114), to allow counterbalanced manufacturing operations at a single point on the workpiece 102, or along a single line of points on the workpiece 102 that may be parallel with the y-axis. Furthermore, the counterbalance assembly 130 may be modified or inverted with respect to the carriage assembly 120 so that the tool support 134 is positioned above the track assembly 110 rather than below the track assembly 110.

Furthermore, the carriage assembly 120 and the track assembly 110 may assume a wide variety of alternate embodiments. For example, in one embodiment, the counterbalance assembly 130 may be coupled to the rail and carriage assembly taught by U.S. Patent No. 4,850,763 issued to Jack et al.. In yet another embodiment, the counterbalance assembly 130 may be used in combination with any of the carriage assemblies and track assemblies disclosed in co-pending, commonly owned U.S. Patent Application No. 10/016,524, which application is incorporated herein by reference.

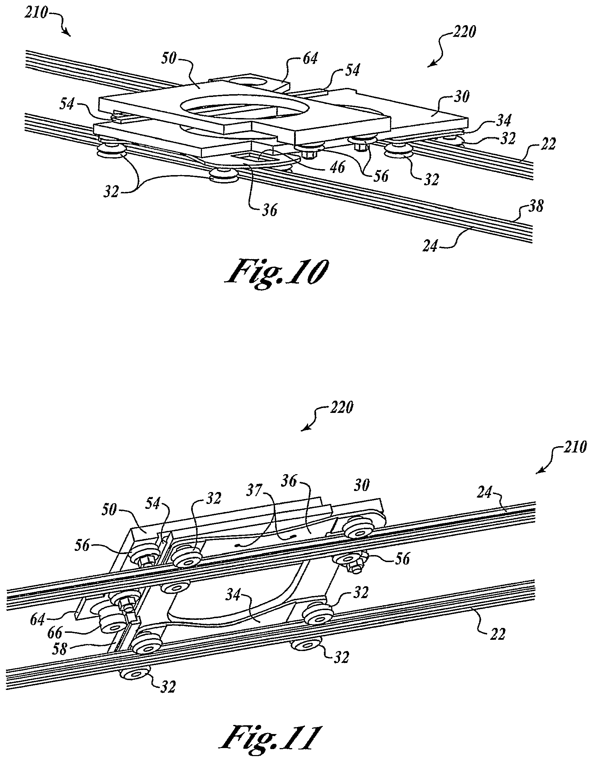

Specifically, FIGURE 9 is an isometric view of an alternate embodiment of a track assembly 210 and a carriage assembly 220 for use in a support assembly 200 in accordance with another embodiment of the invention, as disclosed in U.S. Patent Application No. 10/016,524. FIGURES 10 and 11 are enlarged, partial isometric top and bottom views, respectively, of the track assembly 210 and the carriage assembly 220 of FIGURE 9.

As shown in FIGURES 9-11, the track assembly 210 includes a pair of rails 22, 24 to which a plurality of attachment devices, preferably in the form of vacuum cup assemblies 114 (FIGURE 1) are releasably affixed at spaced intervals along the length of each rail. The rails 22, 24 preferably have a width substantially greater than their thickness such that they are substantially stiffer in bending about an axis that extends in the thickness direction than they are about an axis that extends in the width direction. The rails 22, 24 are oriented approximately parallel to each other, although the lateral spacing between the rails 22, 24 can vary when the rails 22, 24 are mounted on a compound-contoured workpiece surface. Preferably, the rails 22, 24 are rigidly affixed to each other at only one end by a connecting member 28a, which fixes the lateral spacing between the rails at that end. At other locations along the rails 22, 24, the spacing between the rails 22, 24 can vary as noted. There can be another connecting member 28b at the opposite end of the rails 22, 24, but this connecting member 28b may provide a "floating" connection that allows the spacing between the rails 22, 24 to adjust as needed depending on the contour of the workpiece 102 surface.

The widths of the rails 22, 24 extend substantially parallel to the surface of the workpiece 102 when the vacuum cup assemblies 114 are attached to the workpiece surface 102. Because the rails 22, 24 may bend relatively easily about the widthwise directions and to twist about their longitudinal axes, the rails 22, 24 may flex and twist as needed to substantially follow the surface of the workpiece 102 and the vacuum cup assemblies 114 maintain each rail at a substantially constant distance from the surface of the workpiece 102. In this manner, the major surfaces of the rails 22, 24 may be substantially perpendicular to the surface normal of the workpiece 102 at any point along each rail.

With continued reference to FIGURES 9-11, mounted on the rails 22, 24 is a carriage assembly 220 that may translate along the rails 22, 24 by virtue of rollers 32 that are mounted on a first base member 30 of the carriage 220 and engage the rails 22, 24. The first base member 30 of the carriage assembly 220 in the illustrated embodiment comprises a plate-shaped member. The rollers 32 are mounted along each of the opposite side edges of the first base member 30. More particularly, spring plates 34 and 36 (best shown in FIGURE 11) are attached to the first base member 30 adjacent to a lower surface thereof at each of the opposite side edges of the first base member. The spring plates 34, 36 are affixed to the first base member 30 at locations 37 (FIGURE 11) spaced inwardly from the opposite ends of the spring plates 34, 36, such that each spring plate has two opposite end portions that are cantilevered from the first base member 30. The rollers 32 are mounted on these cantilevered end portions of the spring plates 34, 36. There are two opposing rollers 32 mounted on each cantilevered end portion of each of the spring plates 34, 36. Each rail 22, 24 is received between the opposing rollers 32. The rails 22, 24 preferably have V-shaped edges engaged by the rollers 32, and the rollers 32 are V-groove rollers having V-shaped grooves that receive the V-shaped edges of the rails 22, 24. The rollers 32 thus prevent relative movement between the rollers 32 and rails 22, 24 in the direction along the rotational axes of the rollers 32, which axes are substantially normal to the workpiece surface 102.

The spring plates 34, 36 on which the rollers 32 are mounted may flex and twist as needed *(i.e.* as dictated by the contour of the workpiece surface 102 as the carriage assembly 220 traverses the rails 22, 24) to allow a limited degree of relative movement to occur between the first base member 30 and the rollers 32. This is facilitated by making the spring plates 34, 36 relatively narrow at their middles and wider at their ends, so that the plates 34, 36 preferentially bend and twist at approximately the middle rather than at the ends where the rollers 32 are mounted. Thus, a limited degree of relative movement can occur between the first base member 30 and the rails 22, 24. The net result is that the support assembly 200 enables the carriage assembly 220 to traverse the rails 22, 24 along the X-axis (*i.e.* the axis parallel to the length direction of the rails 22, 24) even though the rails 22, 24 may be bending and twisting in somewhat different ways relative to each other. In effect, the rails 22, 24 conform to the contour of the workpiece surface 102 and thus approximate a normal to the surface at any point along the path defined by the rails 22, 24. Consequently, a reference axis of the carriage assembly 220 (in the illustrated embodiment, an axis normal to the plane of the first base member 30) is maintained substantially normal to the workpiece surface 102 at any position of the carriage assembly 220 along the rails 22, 24.

As best shown in FIGURE 9, a rack 38 for a rack and pinion arrangement is mounted along the surface of the rail 24 that faces the spring plate 36, and the carriage assembly 220 includes a first motor 40 and associated gearbox 42 mounted on the spring plate 36. An output shaft from the gearbox 42 has a pinion gear 44 mounted thereon, and the spring plate 36 includes a window 46 (FIGURE 10) that the pinion gear 44 extends through to engage the rack 38 on the rail 24. Thus, rotation of the pinion gear 44 by the first motor 40 drives the carriage assembly 220 along the rails 22, 24. It may be appreciated that the rail 24 having the rack 38 comprises a reference rail relative to which the X-axis positioning of the carriage assembly 220 may be performed. No attempt is necessary to determine or control the X-axis positioning of the carriage assembly 220 relative to the other rail 22.

To improve accuracy of the X-axis position of the carriage assembly 220, the pinion gear 44 may have a constant height relative to the rack 38 at any point along the reference rail 24. To accomplish this height control, the rotation axis of the pinion gear 44 may preferably lie in the same plane as that defined by the rotational axes of the two rollers 32 mounted on the end of the spring plate 36. More particularly, the axes of the rollers 32 may be substantially parallel to each other and substantially normal to the workpiece surface 102, and the axis of the pinion gear 44 may be substantially parallel to the workpiece surface 102 and may lie in the plane of the roller axes.

As further shown in FIGURES 9-11, the carriage assembly 220 further includes a second base member 50 slideably mounted atop the first base member 30 so that the second base member 50 can slide back and forth along a Y-axis direction perpendicular to the X-axis direction. More particularly, rails 52, 54 are affixed to the opposite edges of the first base member 30, and rollers 56 are mounted on the second base member 50 for engaging the rails 52, 54. A rack 58 for a rack and pinion arrangement is affixed to the first base member 30 along the edge thereof adjacent to the rail 54 (see FIGURE 10). A second motor 60 and associated second gearbox 62 are mounted on a plate 64 that is affixed to the second base member 50 adjacent to the rack 58. The plate 64 includes a window therethrough, and the output shaft of the second gearbox 62 extends through the window and drives a pinion gear 66 that engages the rack 58. Thus, rotation of the pinion gear 66 by the second motor 60 drives the second base member along the rails 52, 54 in the Y-axis direction.

In operation, the counterbalance assembly 130 described above with reference to FIGURES 1-8 may be coupled to the second base member 50 of the carriage assembly 220 shown in FIGURE 9, with the rail 132 aligned with the Y-axis, and a manufacturing tool may be coupled to the counterbalance assembly 130. Counterbalance-assisted manufacturing operations may then be performed substantially in accordance with the procedures and methods described above. Movement of the carriage assembly 220 along the x-axis may be provided by a combination of force applied by the operator 104 and/or by the first motor 40. Similarly, positioning of the manufacturing tool along the y-axis may be provided by a combination of force applied by the operation 104 and/or the second motor 60. In further embodiments, gross positioning of the manufacturing tool may be provided by the first and second motors 40, 60, and fine positioning may be provided by the operator 104, or vice versa. Thus, the above-described advantages of apparatus and methods in accordance with the present invention may be achieved using a carriage assembly having one or motors that provide driving force for positioning of the manufacturing tool.

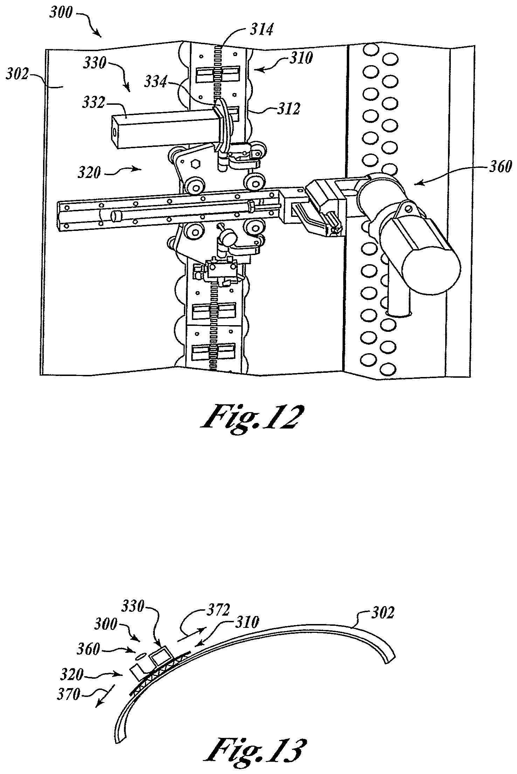

FIGURES 12 and 13 are isometric views of a manufacturing assembly 300 for performing manufacturing operations on a contoured workpiece 302 in accordance with yet another embodiment of the invention. In this embodiment, the manufacturing assembly 300 a track assembly 310, a carriage assembly 320 moveably coupled to the track assembly 310, and a counterbalance assembly 330 coupled to the carriage assembly 320. Many of the details of the manufacturing assembly 300 are similar or identical to the previously described embodiments. Therefore, for the sake of brevity, only significant differences between the manufacturing assembly 300 will be discussed below.

As best shown in FIGURE 12, the counterbalance assembly 330 includes a motor 332 that drives a coupling member 334 that, in turn, engages with the track assembly 310. More specifically, in the embodiment shown in FIGURE 12, the coupling member 334 is a gear that engages with a rack 314 formed in a beam 312 of the track assembly 310. A tool assembly 360 is coupled to the carriage assembly 320 and for performing a manufacturing operation on the workpiece 302. In alternate embodiments, the motor 332 may be a constant torque motor, a constant force motor, a variable torque motor, a constant current motor, or any other suitable motor. In one particular embodiment, the motor 332 is an electric servomotor.

As shown in FIGURE 13, in operation, the track assembly 310 may be affixed to the contoured workpiece 302 such that gravitational forces tend to pull the carriage and tool assemblies 320, 360 along the length of the track assembly 310 in a generally downward direction 370. The counterbalance assembly 330, however, may counteract the gravitational forces by actuating the coupling member 334 (the gear) to exert a counterbalancing force against the gravitational forces in a generally upward direction 372, thereby holding the carriage assembly 320 and the tool assembly 360 at a desired station on the workpiece 302. Preferably, the counterbalance assembly 330 may resist the gravitational forces exerted on the carriage assembly 320 and the tool assembly 360, however, may allow the carriage assembly 320 to be moved by the manual application of force on the manufacturing assembly 300 by an operator when positioning the tool assembly 360 in a desired position for performing a manufacturing operation.

The manufacturing assembly 300 shown in FIGURES 12 and 13 may provide the above-noted advantages of reduced operator fatigue and improved manufacturing throughput using a motor-based counterbalancing assembly 330. Because the motor 332 counterbalances gravitational forces acting in the downward direction 370, an operator is not required to exert manual force on the manufacturing assembly to prevent the carriage assembly 320 from rolling down the track assembly 310 during positioning or during performance of the manufacturing operation. Also, because the counterbalancing assembly 330 uses the motor 332, the counterbalancing cylinder and associated pneumatic lines and pump may be eliminated.

It will be appreciated that in the support assembly 100 described above with respect to FIGURES 1-8, the biasing cylinder could be replaced with a motor and coupling device similar to the embodiment of the manufacturing assembly 300 shown in FIGURES 12 and 13. Thus, a motor-based counterbalancing assembly could be implemented to counterbalance forces acting along the longitudinal axis of the track assembly (FIGURES 12 and 13) or transverse to the longitudinal axis of the track assembly (FIGURES 1-8). In this way, the manufacturing assembly 300 demonstrates that counterbalancing assemblies in accordance with the present invention may be implemented using a variety of counterbalancing devices, and may be used to counterbalance gravitational forces acting along or transversely to the longitudinal axis of the track assembly. Indeed, embodiments of the present invention may be implemented to counterbalance forces acting in substantially any direction relative to the track assembly to assist the operator with manufacturing operations, and to improve the performance of a wide variety of different manufacturing operations on workpieces having substantially flat or complex contoured surfaces.

### Manufacturing Operations Using Opposing-Force Support Systems

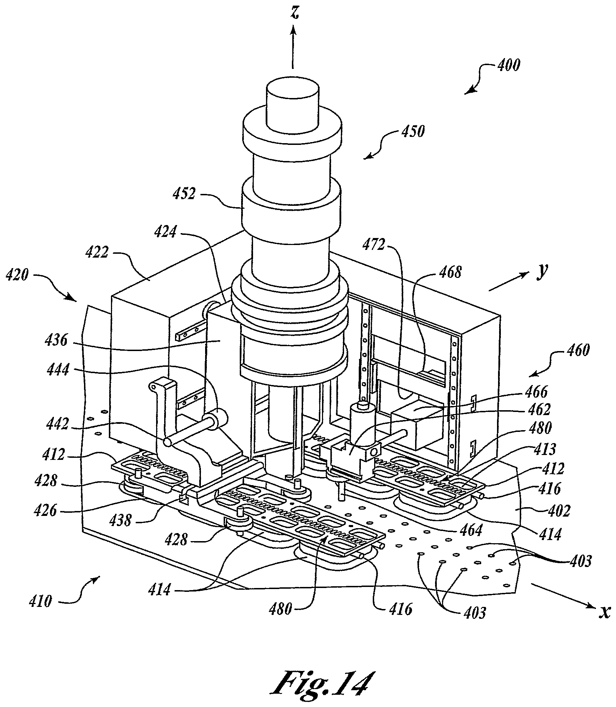

FIGURE 14 is a front isometric view of a manufacturing assembly 400 having an opposing-force support assembly 460 for performing manufacturing operations on a workpiece 402 in accordance with an embodiment of the invention. In this embodiment, the manufacturing assembly 400 includes a track assembly 410 attachable to the workpiece 402, and a carriage assembly 420 moveably coupled to the track assembly 410. A tool assembly 450 *(e.g.* a drilling assembly) is operatively coupled to the carriage assembly 420 such that the tool assembly 450 may be engaged with the workpiece 402. As shown in FIGURE 14, the opposing-force support assembly 460 is coupled to the carriage assembly 420 and is detachably secured to the workpiece 402. Because the opposing-force support assembly 460 may support the workpiece 402 during manufacturing operations, the manufacturing assembly 400 may advantageously reduce or eliminate deflections of the workpiece 402, and may improve the efficiency and quality of the manufacturing operation, as described more fully below.

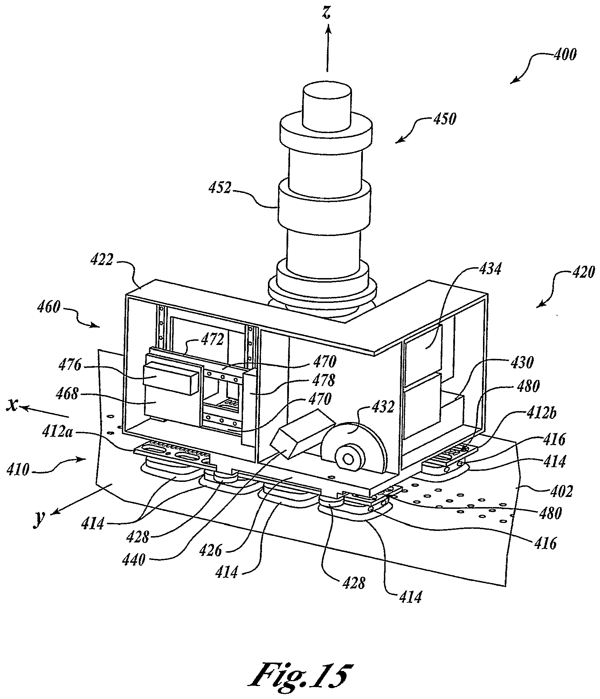

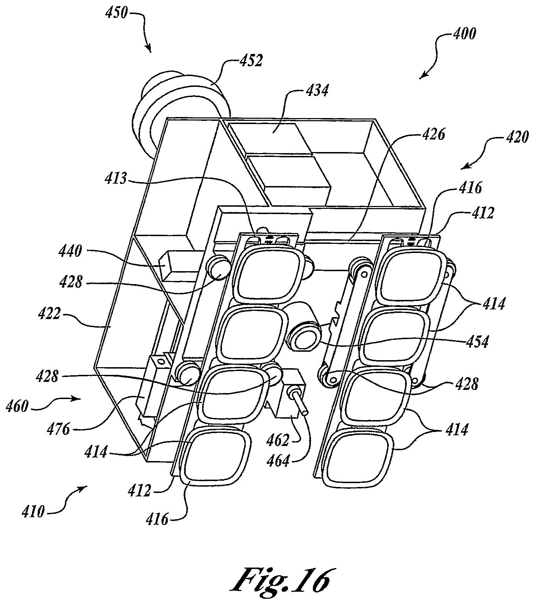

FIGURES 15 and 16 are rear and lower isometric views, respectively, of the manufacturing assembly 400 of FIGURE 14. In this embodiment, the track assembly 410 includes a pair of beams 412, each beam 412 being equipped with a plurality of vacuum cup assemblies 414. The vacuum cup assemblies 414 are fluidly coupled to one or more vacuum lines 416 leading to a vacuum source 418 (not shown), such as a vacuum pump or the like, such that vacuum may be controllably applied to (and removed from) the vacuum cup assemblies 414 during, for example, mounting, re-positioning, and removal of the track assembly 410 to and from the workpiece 402. The vacuum cup assemblies 414 are of known construction and may be of the type disclosed, for example, in U.S. Patent No. 6,467,385 B1 issued to Buttrick et al., or U.S. Patent No. 6,210,084 B1 issued to Banks et al.. In alternate embodiments, the vacuum cup assemblies 414 may be replaced with other types of attachment assemblies, including magnetic attachment assemblies, bolts or other threaded attachment members, or any other suitable attachment assemblies.

With continued reference to FIGURES 14-16, the carriage assembly 420 includes an x-axis (or first) carriage 422 and a y-axis (or second) carriage 424. The x-axis carriage 422 includes a base member 426 having a plurality of rollers 428 that rollably engage the edges of the beams 412. Thus, the x-axis carriage 422 may translate back and forth along the length of the beams 412 along an x-axis that is aligned with the longitudinal axes of the beams 412. In alternate embodiments, the rollers 428 may be replaced with carriage bearings, gears, slide members, rubber wheels, or other suitable coupling devices. In one particular embodiment, the rollers 428 may be replaced with pinion gears that engage a toothed or serrated rack portion of one or both of the beams 412. As shown in FIGURE 15, the x-axis carriage 422 further includes a first drive motor 430 that is operatively coupled to a first gear 432. In this embodiment, the first gear 432 projects through the base member 426 and engages with drive apertures 413 disposed in one of the beams 412. A controller 434 is positioned on the x-axis carriage 422 and is operatively coupled to the first drive motor 430.

Similarly, the y-axis carriage 424 includes a support member 436 slideably coupled to a slot 438 disposed in the base member 426 of the x-axis carriage 422 (FIGURE 14). A second drive motor 440 is attached to the x-axis carriage 422 and to the support member 436, and is also operatively coupled to the controller 434. As shown in FIGURE 14, in this embodiment, the second drive motor 440 drives a shaft (or screw) 442 that engages a ball nut 444 coupled to the support member 436. Thus, the second drive motor 440 may drive the support member 436 of the y-axis carriage 424 along a y-axis oriented transversely to the x-axis.

As best shown in FIGURE 14, the tool assembly 450 is coupled to the support member 436 of the y-axis carriage 424 and may be operatively coupled to the controller 434. In this embodiment, the tool assembly 450 includes a drill spindle module 452 and a pressure foot 454 (FIGURE 16) that is controllably engageable with the workpiece 402 during a drilling operation. The drill spindle module 452 is controllably engageable with the workpiece 402 along a z-axis which is approximately aligned with a local normal to the workpiece 402. The drill spindle module 452 may be any known drilling device suitable for performing drilling operations, including, for example, those drilling devices commercially-available from Cooper Tools, Inc. of Lexington, South Carolina, West Coast Industries, Inc. of Seattle, Washington, Recoules, S.A. of Ozoir-la-Ferriere, France, or from Global Industrial Technologies, Inc. of Dallas, Texas.

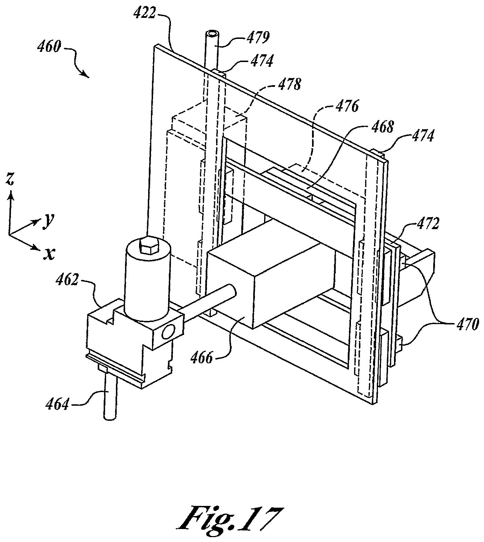

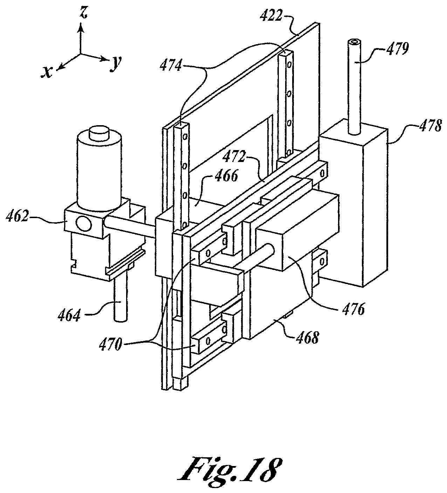

FIGURES 17 and 18 are enlarged, front and rear isometric views, respectively, of the opposing-force support assembly 460 of the manufacturing assembly 400 of FIGURE 14. In this embodiment, the opposing-force support assembly 460 includes a clamp-up actuator 462 having a clamp-up pin 464 that is engageable with the workpiece 402. A first (or y-axis) actuator 466 is coupled to the clamp-up actuator 462 and to a first baseplate 468, and is extendible along the y-axis. The first baseplate 468 is slideably coupled to a pair of first auxiliary rails 470 mounted on a second baseplate 472. Similarly, the second baseplate 470 is slideably coupled to second auxiliary rails 474 mounted on the x-axis carriage 422. As best shown in FIGURE 18, the first auxiliary rails 470 are approximately parallel with the x-axis, and the second auxiliary rails 474 are approximately parallel with the z-axis. A second (or x-axis) actuator 476 is coupled between the first baseplate 468 and the second baseplate 472, and is extendible along the x-axis. A third (or z-axis) actuator 478 is coupled between the second baseplate 472 and to the x-axis carriage 422, and is extendible along the z-axis. The first, second, and third actuators 466, 476, 478 may be operatively coupled to the controller 434. Thus, the first, second, and third actuators 466, 476, 478 may be used to controllably position the clamp-up pin 464 of the opposing-force support assembly 460 at a desired location along the y-axis, the x-axis, and the z-axis, respectively.

It will be appreciated that the clamp-up actuator 462 may be any type of suitable actuator, including a hydraulic, pneumatic, or electrically-driven actuator. Similarly, the first, second and third actuators 466, 476, 478 may be hydraulic, pneumatic, electric, or any other suitable type of actuators. In one particular embodiment, the first, second and third actuators 466, 476, 478 are so-called "return to home" pneumatic actuators that are coupled by one or more pneumatic supply lines 479 (FIGURES 17 and 18) to a source of pressurized air (not shown).

In operation, the manufacturing assembly 400 may be mounted onto the workpiece 402 and vacuum may be provided to the vacuum assemblies 414, thereby securing the track assembly 410 in a desired position. A hole 403 may be formed in the workpiece 402 in any desired manner, such as during fabrication of the workpiece 402, or using the tool assembly 450 or another drilling device. Next, the clamp-up pin 464 may be positioned in the hole 403. The positioning of the clamp-up pin 464 into the hole 403 may be accomplished in a variety of ways. For example, the position of the clamp-up pin 464 along the x-axis may be accomplished by controllably positioning the x-axis carriage 422 using the first drive motor 430, or controllably positioning the first baseplate 468 along the first auxiliary rails 470 using the second actuator 476, or by a combination of both of these methods. Similarly, the position of the clamp-up pin 464 along the y-axis may be accomplished by controllably positioning the y-axis carriage 424 using the second drive motor 440, or by controllably actuating the first actuator 466, or both. Finally, the position of the clamp-up pin 464 along the z-axis may be accomplished by controllably positioning the second baseplate 472 along the second auxiliary rails 470 using the third actuator 478. In one particular embodiment, the x-axis and y-axis carriages 422, 424 are employed to perform coarse, relatively large scale positioning, and the second and first actuators 476, 466 are used to provide finer, relatively small scale positioning of the clamp-up pin 464 along the x- and y-axes, respectively.

The above-described positioning of the opposing-force support assembly 460 may be accomplished in an automated or semi-automated manner using the controller 434 equipped with conventional, computerized numerically-controlled (CNC) methods and algorithms. Alternately, the positioning may be performed manually by an operator, such as, for example, by temporarily disabling or neutralizing the above-referenced motors and actuators of the carriage and clamp-up assemblies 420, 460 to permit the opposing-force support assembly 460 to be positioned manually.

With further reference to FIGURES 14-18, after the clamp-up pin 464 is positioned within the hole 403, the clamp-up actuator 462 may be actuated to securely engage the clamp-up pin 464 within the hole 403, thereby fixing the position of the opposing-force support assembly 460 with respect to the workpiece 402. After the clamp-up assembly 460 is securely engaged with the workpiece 402, the tool assembly 450 may be used to perform manufacturing operations on the workpiece 402. Specifically, in the embodiment shown in FIGURES 14-16, the drill spindle module 452 may be operated to drill one or more additional holes 403 into the workpiece 402. For example, the additional holes 403 may be created by controllably positioning the tool assembly 450 using the carriage assembly 420 in an automated or semi-automated manner using the controller 434 and conventional CNC methods and algorithms. Because the opposing-force support assembly 460 is moveably secured to the carriage assembly 420, the carriage assembly 420 may be used to re-position the tool assembly 450 without detaching the opposing-force support assembly 460 from the workpiece 402. Thus, with the opposing-force support assembly 460 secured to the workpiece 402, the tool assembly 450 may be successively and repeatedly repositioned at a plurality of desired locations on the workpiece 402 to perform manufacturing operations.

After one or more manufacturing operations have been performed on the workpiece 402, the opposing-force support assembly 460 may be detached from the workpiece 402 by deactivating the clamp-up actuator 462 and removing the clamp-up pin 464 from the hole 403. If desired, the opposing-force support assembly 460 may then be repositioned to a new location and may be secured again to the workpiece 402 by inserting the clamp-up pin 464 into a different hole 403 (such as one of the newly formed holes) and actuating the opposing-force support assembly 460 in the manner described above. With the opposing-force support assembly 460 secured to the workpiece 402 in the new location, additional manufacturing operations may be conducted on the workpiece 402 as desired.

Manufacturing assemblies having opposing support systems in accordance with the teachings of the present invention may advantageously improve the quality of manufacturing operations on a workpiece. Because the opposing-force support assembly 460 opposingly supports (or counterbalances) the workpiece during the application of forces on the workpiece by the tool assembly 450, the workpiece 402 may be less likely to bend or deflect during the manufacturing process, especially for relatively thin or relatively flexible workpieces. Since deflections of the workpiece 402 may be reduced or eliminated, the orientation of the tool assembly 450 with respect to the workpiece 402 may be more easily maintained by the carriage assembly 420. Thus, the manufacturing operations may be more accurately and consistently conducted using the manufacturing assembly 400. Because the manufacturing operations may be more accurately and consistently performed, the costs associated with inspecting and reworking the workpiece 402 during the manufacturing operation may be reduced.

The manufacturing assembly 400 having the opposing-force support assembly 460 may also improve the speed with which manufacturing operations may be performed. Because the opposing-force support assembly 460 provides opposing support to the workpiece 402 during manufacturing operations, the tool assembly 450 may be more forcefully applied to the workpiece 402. In this way, the speed with which the manufacturing operations are performed may be increased, and the efficiency and throughput of the manufacturing operations may be improved.

It will be appreciated that a wide variety of suitable embodiments of opposing support assemblies 460 may be conceived in accordance with the teachings of the present invention. For example, a variety of clamp-up pins 464 and clamp-up actuators 462 are known that may be employed to secure the opposing-force support assembly 460 to the workpiece 402, including, for example, a collet device of the type generally disclosed in U.S. Patent No. 4,396,318 issued to Jensen et al., U.S. Patent No. 5,395,187 issued to Slesinski et al., and U.S. Patent No. 6,036,409 issued to Rissler, or a clamping device of the type generally disclosed in U.S. Patent No. 5,482,411 issued to McGlasson and U.S. Patent No. 6,283,684 B1 issued to Jarvis. In one alternate embodiment, the hole 403 may be a threaded hole 403, and the clamp-up pin 464 may be a threaded member that threadedly engages the threaded hole 403. In further embodiments, the clamp-up pin 464 and clamp-up actuator 462 may be replaced with any other suitable securing devices, including one or more of the above-referenced vacuum cup assemblies 414, magnets, or other electro-magnetic apparatus, such as, for example, an apparatus that exerts a force on a workpiece in a manner similar to the electromagnetic dent remover apparatus commercially-available from Electroimpact, Inc. of Everett, Washington.

It may also be appreciated that manufacturing assemblies in accordance with the present invention, including the particular embodiment of the manufacturing assembly 400 described above, may be used to provide opposing support to a wide variety of manufacturing tools, and that the teachings of the present invention are not limited simply to manufacturing operations that involve drilling. For example, manufacturing assemblies having opposing support assemblies in accordance with the present invention may be used to support riveters, mechanical and electromagnetic dent pullers, welders, wrenches, clamps, sanders, nailers, screw guns, or virtually any other desired type of manufacturing tools or measuring instruments.

It may also be appreciated that a variety of alternate embodiments of apparatus and methods may be conceived in accordance with the present invention, and that the invention is
not limited to the particular apparatus and methods described above and shown in the accompanying figures. For example, it may be noted that the carriage assembly 420 and the track assembly 410 may assume a wide variety of alternate embodiments. For example, in one embodiment, the opposing-force support assembly 460 may be coupled to the rail and carriage assembly taught by U.S. Patent No. 4,850,763 issued to Jack et al. In yet another embodiment, the opposing-force support assembly 460 may be used in combination with any of the carriage assemblies and track assemblies disclosed in co-pending, commonly owned U.S. Patent Application No. 10/016,524.

Specifically, in one alternate embodiment, opposing-force support systems may be used in combination with the track assembly 210 and carriage assembly 220 described above with reference to FIGURES 9-11. More specifically, as shown in FIGURE 9, mounted atop the y-axis carriage is a clamp ring assembly 70. The clamp ring assembly 70 may be used to support and secure a tool assembly 450, such as the drill spindle module 452 described above. The tool assembly 450 may be extended through a window in the y-axis carriage 50 (visible in FIGURE 10), and through a window in the x-axis carriage 30 (visible in FIGURE 11) that is elongated in the y-axis direction. The axis of the tool assembly 450 may be approximately parallel to the z-axis, and thus may be substantially normal to the workpiece 402.

In operation, the opposing-force support assembly 460 described above with reference to FIGURES 14-18 may be coupled to the carriage assembly 220 shown in FIGURES 9-11 in any suitable manner, and a manufacturing tool assembly 450 may be coupled to the carriage assembly 220 (*e.g.,* to the clamp ring assembly 70). Manufacturing operations may then be performed substantially in accordance with the procedures and methods described above. Movement of the carriage assembly 220 along the x-axis may be
provided by a combination of force applied by the operator 404 and/or by the first motor 40. Similarly, positioning of the manufacturing tool along the y-axis may be provided by a combination of force applied by the operation 404 and/or the second motor 60. In further embodiments, gross positioning of the manufacturing tool may be provided by the first and second motors 40, 60, and fine positioning may be provided by the operator 404, or vice versa. Thus, the above-described advantages may be achieved using alternate embodiments
of track assemblies and carriage assemblies to create additional embodiments of manufacturing assemblies in accordance with the teachings of the present invention.

Manufacturing Operations Using Track Members Having a Neutral-Axis Rack

Referring again to FIGURES 14 and 15, in this embodiment, the track assembly 410 includes a pair of flexible beams 412, each beam 412 having an integrally-formed rack 480. As described more fully below, the integrally-formed racks 480 may provide improved position control of the carriage assembly 420, thereby improving the quality of manufacturing operations performed on the workpiece 402.

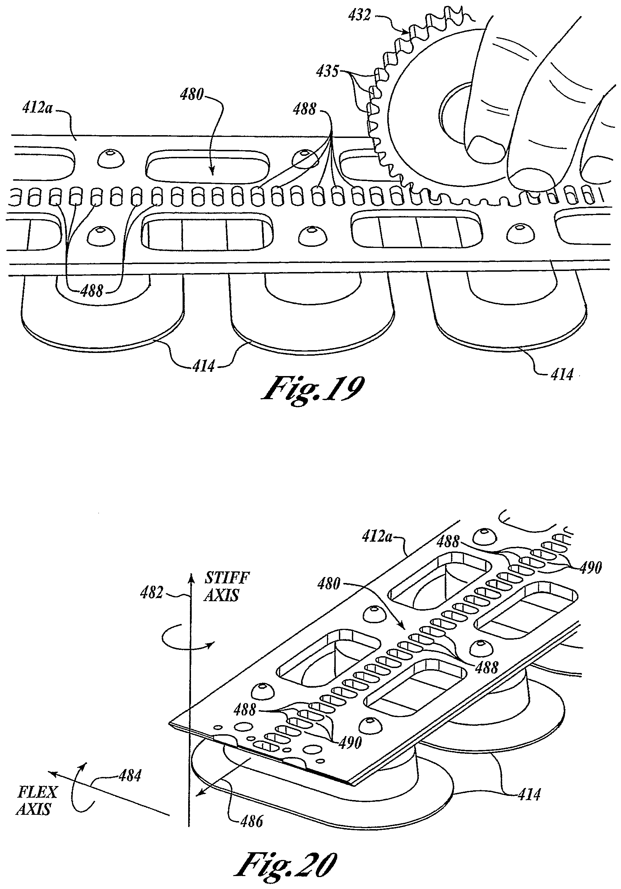

As further shown in FIGURES 19-21, the rack 480 includes a plurality of apertures 488 integrally-formed in the rail 412a along the neutral axis 486 of the rail 412a. In other words, a pitch line of the rack 480 extends along and at least approximately coincides with the neutral axis 486 of the rail 412. Bridges 490 are formed between each pair of successive apertures 488. As best shown in FIGURE 19, the teeth 435 of the first drive gear 432 are engaged at least partially into the apertures 488 and against the bridges 490 of the rack 480.

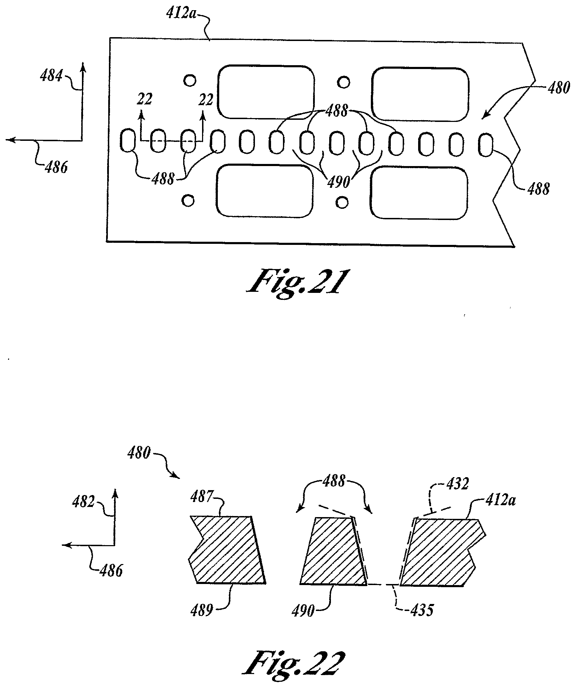

FIGURE 22 is an enlarged, side cross-sectional view of a portion of the rail 412a taken along line A-A of FIGURE 21. As shown in FIGURE 22, in this embodiment, the apertures 488 are tapered along the stiff axis 482 such that the apertures 488 are wider at a top surface 487 of the rail 412a and narrower at a bottom surface 489 of the rail 412a. In one aspect, the apertures 488 are tapered in a wedge-shaped (or two-dimensional) manner. In an alternate aspect, the apertures 488 are partially-conically (or three-dimensionally) shaped. As further shown in FIGURE 22, the apertures 488 may be tapered to closely match the profile of the teeth 435 of the drive gear 432. In one particular embodiment, the thickness of the rail 412 is equal to the length of the tooth 435 of the drive gear 432 (FIGURE 22). Because the pitch line of the rack 480 at least approximately coincides with the neutral axis 486, the rack 480 remains aligned along the neutral axis 486 during bending and flexing of the rail 412a over the workpiece 402. Thus, the teeth 435 of the drive gear 432 may remain more positively engaged with the rack 480 as the carriage assembly 420 is driven over the track assembly 410, even when the rails 412 are twisted and flexed over contoured surfaces.

It will be appreciated that the rack 480 may be integrally-formed with the rail 412 using any desired manufacturing techniques. For example, the rack 480 may be formed in the rail 412 after the rail 412 has been formed, such as by milling, drilling, hogging, or using any other suitable methods. Alternately, the rack 480 may be formed simultaneously with the formation of the rail 412, such as by casting, stamping, or pressing.

In operation, the manufacturing assembly 400 may be mounted onto the workpiece 402 and vacuum may be provided to the vacuum assemblies 414, thereby securing the track assembly 410 in a desired position. The carriage assembly 420 may then be moved to a desired position along the track assembly 410, so that the tool assembly 450 may be used to perform manufacturing operations on the workpiece 402. The controller 434 may transmit control signals to the first drive motor 430, rotating the first drive gear 432 which engages with the integrally-formed rack 480 in the rail 412a. As best shown in FIGURE 22, the teeth 435 of the first drive gear 432 may engaged partially or fully into the apertures 488 and may exert a driving force against the bridges 490 of the rack 480, thereby driving the carriage assembly 420 along the rails 412 until the carriage assembly 420 reaches the desired position.

It may be appreciated that the positioning of the carriage assembly 420 on the track assembly 410, and the positioning and engagement of the opposing-force support assembly 460 and the tool assembly 450 with respect to the workpiece 402 may be accomplished in an automated or semi-automated manner using the controller 434 equipped with conventional, computerized numerically-controlled (CNC) methods and algorithms. Alternately, the positioning may be performed manually or partially-manually by an operator, such as, for example, by having the operator provide manual control inputs to the controller 434, or by temporarily disabling or neutralizing the above-referenced motors and actuators of the carriage and clamp-up assemblies 420, 460 to permit manual movement.

Next, the clamp-up pin 464 may be positioned in a hole 403, and the clamp-up actuator 462 may be actuated, to securely engage the clamp-up pin 464 within the hole 403, thereby fixing the position of the opposing-force support assembly 460 with respect to the workpiece 402. The tool assembly 450 may then be employed to perform manufacturing operations on the workpiece 402. Specifically, in the embodiment shown in FIGURES 14 and 15, the drill spindle module 452 may be operated to drill one or more additional holes 403 into the workpiece 402. Like the carriage assembly 420, the tool assembly 450 may be controlled and operated in an automated or semi-automated manner using the controller 434 and conventional CNC methods and algorithms.

Manufacturing assemblies having integrally-formed racks in accordance with the teachings of the present invention may advantageously improve the quality of manufacturing operations on a workpiece. Because the rack 480 is integrally-formed with the rail 412 with the pitch line of the rack 480 at least approximately aligned with the neutral axis 486 of the rail 412, the teeth 435 of the drive gear 432 remain in positive engagement with the rack 480 even when the rail 412 is flexed and twisted over contoured surfaces. The integrally-formed rack 480 may advantageously permit more accurate positioning of the carriage assembly 420 on the track assembly 410, and thus, more accurate positioning of the tool assembly 450 over the workpiece 402. The manufacturing assembly 400 may therefore provide improved accuracy and consistency of manufacturing operations in comparison with prior art manufacturing assemblies. Because the manufacturing operations may be more accurately and consistently performed, the costs associated with inspecting and reworking the workpiece 402 during the manufacturing operation may be reduced.

The manufacturing assembly 400 having the track assembly 410 in accordance with the invention may also improve the speed with which manufacturing operations may be performed. Because the integrally-formed rack 480 of the track assembly 410 may provide improved position control of the tool assembly 450 during manufacturing operations, the tool assembly 450 may be positioned and operated with relatively fewer delays for position checking and position adjustment, and the need for repair and rework of the manufacturing operations (e.g. hole reworking etc.) may be reduced. In this way, the speed with which the manufacturing operations are performed may be increased, and the efficiency and throughput of the manufacturing operations may be improved.

It will be appreciated that manufacturing assemblies in accordance with the present invention, including the particular embodiment of the manufacturing assembly 400 described above, may be used to provide opposing support to a wide variety of manufacturing tools, and that the teachings of the present invention are not limited simply to manufacturing operations that involve drilling. For example, manufacturing assemblies having opposing support assemblies in accordance with the present invention may be used to support riveters, mechanical and electromagnetic dent pullers, welders, wrenches, clamps, sanders, nailers, screw guns, routers, degreasers, washers, etchers, deburring tools, lasers, tape applicators, or virtually any other desired type of manufacturing tools or measuring instruments.

It may also be appreciated that a variety of alternate embodiments of apparatus and methods may be conceived in accordance with the present invention, and that the invention is not limited to the particular apparatus and methods described above and shown in the accompanying figures. For example, it may be noted that the carriage assembly 420 and the track assembly 410 may assume a wide variety of alternate embodiments. For example, in alternate embodiments, an integrally-formed rack 480 in accordance with the present disclosure may be used in combination with any of the carriage assemblies and track assemblies disclosed in co-pending, commonly owned U.S. Patent Application No. 10/016,524.

### Manufacturing Operations Using Non-Contact Position Sensing

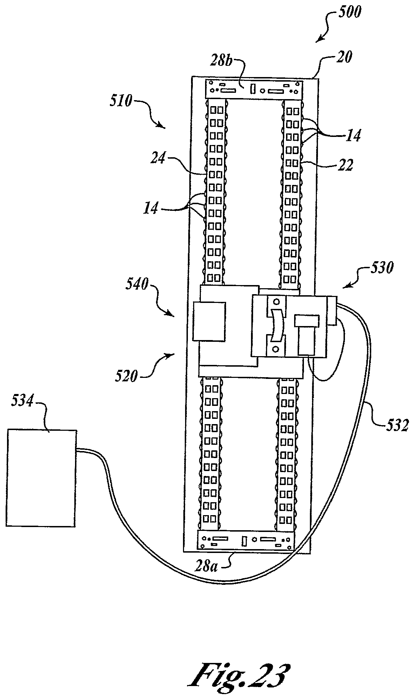

FIGURE 23 is a front elevational view of a manufacturing assembly 500 having a position sensor assembly 540 in accordance with an embodiment of the invention. In this embodiment, the manufacturing assembly 500 includes a track assembly 510 attachable to workpiece 20, and a carriage assembly 520 moveably coupled to the track assembly 510. A controller 530 is operatively coupled to the position sensor assembly 540 and to the carriage assembly 520. As described more fully below, the manufacturing assembly 500 having the position sensor assembly 540 may advantageously improve the accuracy and efficiency of manufacturing operations performed on the workpiece 24.

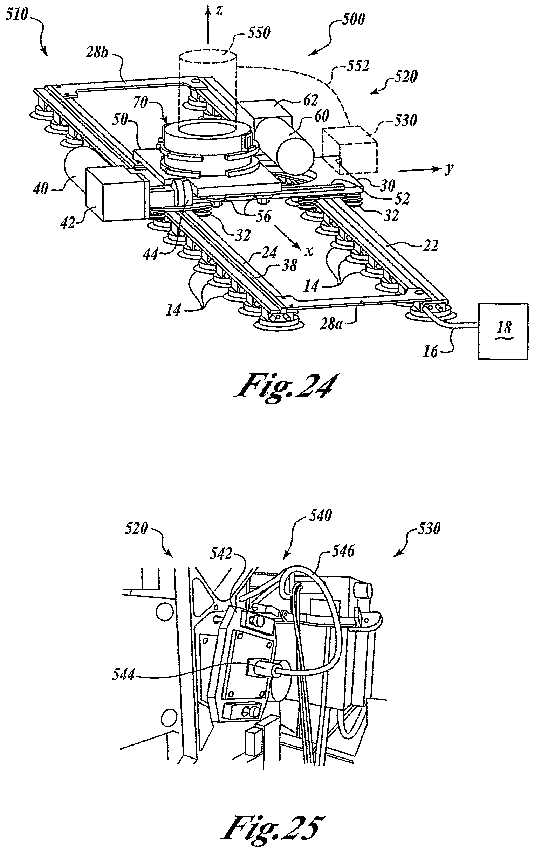

FIGURE 24 is an upper isometric view of the track assembly 510 and the carriage assembly 520 of FIGURE 23 with the position sensor assembly 540 removed. In this embodiment, the track assembly 510 and the carriage assembly 520 are substantially similar to the track and carriage assembly embodiments described above with respect to FIGURES 9-11. Therefore, for the sake of brevity, only significant differences shown in FIGURES 23 and 24 will now be described.

FIGURE 25 is an enlarged, partial isometric view of the position sensor assembly 540 and the controller 530 of the manufacturing assembly 500 of FIGURE 23. As shown in FIGURE 25, the position sensor assembly 540 includes a mount 542 that is coupled to the carriage assembly 520 *(e.g.* to the clamp ring assembly 70), and a sensor 544 that is operatively coupled to the mount 542. A sensor link 546 is coupled between the sensor 544 30 and the controller 530 for transmitting and receiving signals.

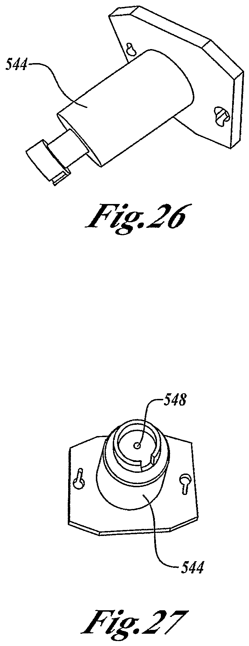

FIGURES 26 and 27 are side and bottom isometric views, respectively, of the sensor 544 of FIGURE 25. As best shown in FIGURE 27, the sensor 544 includes a sensing element 548 for transmitting signals toward the workpiece 20, and for receiving reflected signals from the workpiece 20, as described more fully below. It will be appreciated that the sensor 544 may be any suitable digital or analog sensing element, including, for example, those sensors commercially-available from Sunx, Inc. of Des Moines, Iowa, or from Keyence, Inc. of American, New Jersey. In one embodiment, the sensing element 548 may
be a fiber optic sensing element, and in one particular embodiment, the sensing element may be a coaxial fiber optic retro-reflective sensing element. In other alternate embodiments, for example, sensor element 548 may include cameras (*e.g.* DVT camera vision systems), magnetic proximity sensors, or any other suitable sensor element. It will be appreciated that the signals transmitted from the sensor 544 to the workpiece 20, and reflected back from the workpiece 20 to the sensor 544, may be visible light, infrared or ultra-violet signals, acoustic signals, or any other desired type of signal.

With reference to FIGURES 23 through 25, the track assembly 510 maybe secured to the workpiece 20, and the carriage assembly 520 may be used to support the position sensor assembly 540 such that the sensing element 548 is pointed toward the workpiece 20. The position sensor assembly 540 may then be employed to locate the coordinates of one or more indexing features (or reference points) located on the workpiece 20. As described more fully below, the position sensor assembly 540 provides a capability for the manufacturing assembly 500 to determine a positional orientation of the manufacturing assembly 500 based on one or more known indexing features (e.g. a hole, a fastener, a bushing, or other feature) without physical contact between the sensor assembly 540 and the workpiece 20.

In one aspect, the sensing element 548 includes a bright LED coaxial fiber optic cable that uses a lens system to focus incident or illuminating light onto the workpiece 20. In brief, the incident light may be transmitted through the center fiber of the coaxial fiber optic cable, through a lens, and may be reflected by the surface of the workpiece 20. The reflected light may then be collected through the lens and returned to a sensor amplifier through the outer portion of the coaxial fiber optic cable. The sensor amplified may then convert the intensity of the light into an analog electrical signal. The output from the sensor amplifier may be calibrated to a focal point of the lens by reading the reflected light from a standard white reflective surface. As the scan path encounters various features on the surface, the reflected light may be analyzed and when the collected data match a defined set of parameters, a known index feature (e.g. fastener, hole, etc.) can be recognized. The signal may be read and correlated to a position on the surface by using feedback from a positioning system. This location information may then be used to position other equipment on the surface of the workpiece 20, making it possible to control a system of tools or processes, as described more fully below.

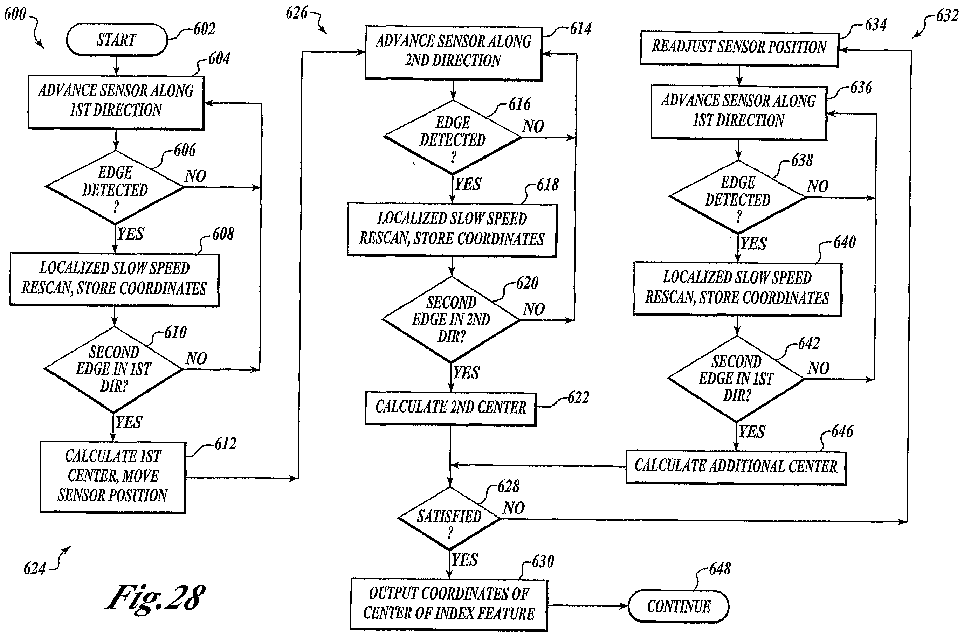

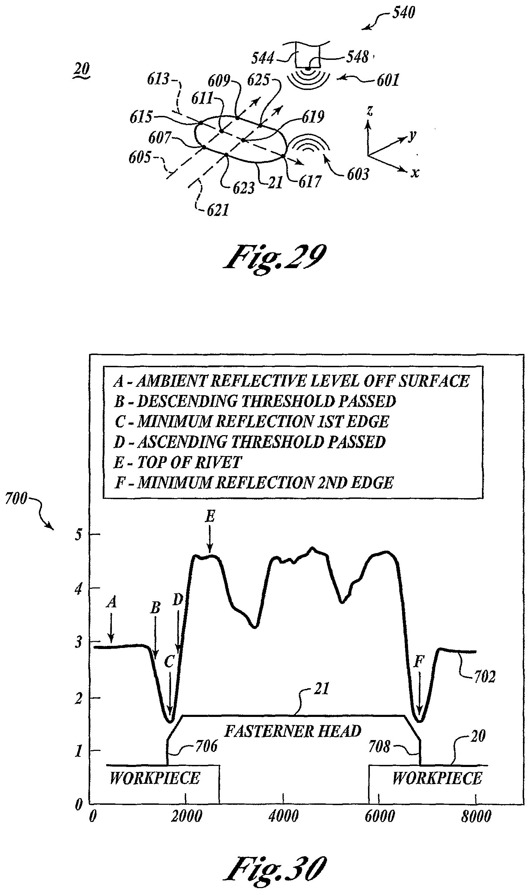

FIGURE 28 is a flowchart showing a method 600 of position determination using the sensor assembly 540 in accordance with an embodiment of the invention. FIGURE 29 is a schematic representation of the method 600 of position determination of FIGURE 28. The steps of the method 600 may be implemented using known programmable or semi-programmable components and software routines. As shown in FIGURES 28 and 29, the method 600 may begin at an initial step 602 in which the position sensor assembly 540 is initially positioned proximate to an indexing feature 21 that is to be detected, such as by an operator manually positioning the carriage assembly 520 at a suitable location on the track assembly 510, and the position sensor assembly 540 begins transmitting one or more detection signals 601 onto the workpiece 20 and receiving corresponding reflected signals 603 back from the workpiece 20. Next, in step 604, the sensor 544 is either incrementally or continuously advanced along a first path 605 in a first direction (shown as the y-direction in FIGURE 29).

With continued reference to FIGURES 28 and 29, as the sensor 544 is advanced along the first path 605, the method 600 continues to transmit detection signals 601 and monitor the received reflected signals 603 to determine whether a first edge 607 of the index feature 21 has been detected (step 606). If the sensor 144 is a digital sensor, the sensor 144 may indicate that the edge has been reached by providing a sensor output that transitions from a first well-defined state indicating that the sensor 144 is receiving reflected signals 603 that are reflecting from the workpiece 20, to a second well-defined state indicated that the sensor 144 is receiving reflected signals 603 that are reflecting from the index feature 21. Alternately, if the sensor 144 is an analog sensor, the sensor output may be proportional to the reflected signals 603 from the workpiece 20 and from the index feature 21, thereby providing an indication of when the sensor 144 is over each component, respectively.

Eventually, based on the reflected signals 603, the first edge 607 (FIGURE 29) of the index feature 21 may be detected (step 606). Next, in step 608, the position of the sensor 544 may be readjusted and a localized, slow speed (or small increment) rescan may be performed to determine the coordinates of the first edge 607, and the coordinates of the first edge 607 are stored. In step 610, the method 600 determines whether the edge that has just been detected is a second edge 609 (see FIGURE 29) of the index feature 21, and if not, the method 600 repeats steps 604 through 608 to determine and store the coordinates of the second edge 609.

Next, in step 612, the method 600 uses the coordinates of the first and second edges 607, 609 to calculate a first center 611 along the first path 605, and repositions the sensor 544 at a location spaced apart from the index feature 21 with a value along the first direction (e.g. the y coordinate) that corresponds to the value of the first center 611. The sensor 544 is then advanced along a second path 613 (shown as the x direction in FIGURE 29) in step 614, and the output from the sensor 544 is monitored to determine whether a first edge 615 of the index feature 21 along the second path 613 has been detected (step 616). After the first edge 615 along the second path 613 has been detected, as described above, the position of the sensor 544 may be readjusted and a localized, slow speed (or small increment) rescan may be performed along the second path 613 to determine the coordinates of the first edge 615, and the coordinates of the first edge 615 along the second path 613 are stored (step 618). After storing the coordinates, the method 600 next determines whether the edge that has just been detected is a second edge 617 of the index feature 21 along the second path 613 (see FIGURE 29) in step 620, and if not, the method 600 repeats steps 614 through 618 to determine and store the coordinates of the second edge 617 along the second path 613. In step 622, the method 600 uses the coordinates of the first and second edges 615, 617 along the second path 613 to calculate a second center 619 (FIGURE 29).

With reference to FIGURE 28, steps 604 through 612 may generally be referred to as a first sweep 624 of the sensor 544, and steps 614 through 622 may be referred to as a second sweep 626 of the sensor 544. After determining the coordinates of the first and second centers 611, 619 using the first and second sweeps 624, 626, the method 600 may simply assume that the coordinates of an index center of the index feature 21 are the same as the coordinates of the second center 619. If this approach is deemed satisfactory in step 628, then the method 600 proceeds with outputting the coordinates of the center of the index feature 21 in step 630. If additional accuracy or confirmation is desired, however, the method 600 may include one or more additional sweeps 632 of the sensor 544.

As shown in FIGURE 28, in an additional sweep 632 is desired, the sensor 544 is repositioned in step 634 to a location spaced apart from the index feature 21 but having the same value along the second direction (x coordinate in FIGURE 29) as the second center 619. Next, the sensor 544 is advanced along a third path 613 (shown as the y direction in FIGURE 29) in step 636, and the output from the sensor 544 is monitored to determine whether a first edge 623 of the index feature 21 along the third path 621 has been detected (step 636). After the first edge 623 along the third path 621 has been detected, the position of the sensor 544 may be readjusted and a localized, slow speed (or small increment) rescan may be performed along the third path 621 to determine the coordinates of the first edge 623, and the coordinates of the first edge 623 along the third path 621 are stored (step 640). After storing the coordinates, the method 600 next determines whether the edge that has just been detected is a second edge 625 of the index feature 21 along the third path 621 (step 642). If not, the method 600 repeats steps 236 through 640 to determine and store the coordinates of the second edge 625 along the third path 621. In step 646, the method 600 uses the coordinates of the first and second edges 623, 625 along the third path 621 to compute a third (or additional) center 627.

After the additional sweep 632 is conducted, the method 600 may again determine whether the desired degree of accuracy has been reached in step 628. If not, additional sweeps similar to the third sweep 632 may be conducted along, for example, different paths. If additional sweeps are not desired, then the method 600 proceeds to step 630, and the coordinates of the index center are output. The results of the third sweep 632 (or more sweeps) may provide an improved indication of the index center of the index feature 21. For example, the index center may be determined as the average of the coordinates of the second and third centers 619, 627. After the index center of the index feature 21 is output (step 630), the method 600 may continue in step 648 to the next phase of manufacturing operations.

It may be appreciated that the particular locations and directions of the first, second, and third paths 605, 613, 621 of the method 600 may be varied from the particular embodiment shown in FIGURE 69, and that the present invention is not limited to the particular details described above and shown in the accompanying figure. For example, the first direction of the first path may be along the x axis, and the second direction of the second path may be along the y axis, or alternately, the first and second paths may be along any desired directions across the index feature 21. Preferably, however, the first and second paths are orthogonally oriented. It may also be appreciated that the method 600 may be better suited for locating an index center of an index feature having a round (or approximately round) shape, although other shapes of index features may be employed and detected using the apparatus and methods in accordance with the present invention.

FIGURE 30 is a graph 700 of a representative sensor output signal level 702 of a sensor sweep 704 used to detect a position of an index feature 21 in accordance with an embodiment of the invention. In this embodiment, the index feature 21 is a fastener head that is raised above the surface of the surrounding workpiece 20. The signal level 702 of FIGURE 30 may be provided by an analog type of sensor 544. As shown in FIGURE 30, during a first portion A of a sensor sweep 704, the signal level 702 is characterized by a generally constant level as reflected signals are receive by the sensor 144 from the surface of the workpiece 20. In a second portion B, the signal level 702 is characterized by a descending level of reflected signals received by the sensor 544 as the detection signals begin to impinge on and reflect from a leading edge 706 of the fastener head 21.

As further shown in FIGURE 30, as the sensor sweep 704 continues, the signal level 702 reaches a first minimum reflection value at a location C, and then enters a portion D that is characterized by an ascending signal level as an increasing level of reflected signals are received by the sensor 544. Next, the signal level generally levels off during a next portion E of the sensor sweep 704 as the sensor 544 begins receiving a relatively constant level of reflected signals from the top of the fastener head 21. Continuing the sensor sweep 704 across the top of the fastener head 21 to a trailing edge 708 of the fastener head 21, the signal level 702 eventually is characterized by a relatively substantial descent to a second minimum reflection level at a location F, and then rises again to an ambient reflection level characteristic of reflections from the surface of the workpiece 20. In one embodiment, the method 600 described above with reference to FIGURES 28 and 29 performs the above-referenced edge determinations (steps 606, 608, 616, 618, 638, and 640) by assigning the coordinates of the sensor 544 corresponding to the locations of the first and second minimum reflection levels (locations C and F) as being the coordinate positions of the first and second edges for each of the paths 605, 613, 621.

More specifically, the leading and trailing edges 706, 708 may be computed from the signal level 702 by first computing an ambient reflectivity level (portion A), such as by computing a running average of the sensor level 702. During the sensor sweep 704, as the sensor level 702 drops below a predetermined threshold, such as a predetermined percentage of the ambient reflectivity level, an edge detection procedure may be invoked. The edge detection procedure may store the minimum sensor value (location C) corresponding to the leading edge 706 and the position coordinates thereof, and may also store the same information from the minimum sensor value corresponding to the trailing edge 708 (location F). A center may then be mathematically computed from the positions of the two minimum sensor values (locations C and F).

It will be appreciated that the characteristics of the sensor level may vary, and that various index features may provide sensor levels having different shapes, trends, and characteristics than that shown in the graph 700 of FIGURE 30. Similarly, it may be desirable to monitor different aspects of the sensor level other than the locations of the minimum sensor values, such as, for example, the derivative (or slope) of the sensor levels. In one alternate embodiment, for example, the index feature may be a bushing having a concave rolled edge. For such a bushing, the edges of the bushing may be more readily determined by monitoring a derivative of the sensor level (e.g. with respect to the distance traveled by the sensor 144) during a sensor sweep over the bushing. In that case, the peaks or maxima of the derivative values may be representative of the rate of change of the profile of the surfaces over which the sensor 144 is swept, effectively shifting the pattern in time by a constant of differentiation.

In operation, the position sensor assembly 540 may be employed to determine the locations of one or more index features 21 on the workpiece 20, thereby precisely defining the position of the manufacturing assembly 500 on the workpiece 20. This information may then be stored in a memory device of the controller 530. After the position sensor assembly 540 has been employed for this purpose, the position sensor assembly 540 may be removed from the carriage assembly 520, and the tool assembly 550 may be installed on the carriage assembly 520. Using command and control information stored in its memory device, the controller 530 may then autonomously control the carriage assembly 520 and the tool assembly 550 to perform the desired manufacturing operations at the desired locations on the workpiece 20. Different tool assemblies may be interchanged to and from the carriage assembly 520 to perform different manufacturing operations as desired.

Manufacturing assemblies having the position sensor assembly in accordance with the teachings of the present invention may advantageously improve the quality and efficiency of manufacturing operations on a workpiece. The position sensor assembly may provide a relatively fast, automated method of precisely locating the manufacturing assembly on the workpiece using an indexing feature that may already be part of the workpiece or the structure. The need for physical contact index points, the accuracy of which may become degraded, is thereby reduced or eliminated. The need to precisely position the track assembly on the workpiece at the start of manufacturing operations is also reduced or eliminated. The position sensor may accurately determine the location of the manufacturing assembly on the workpiece, and the data corresponding to the desired locations of the manufacturing operations (e.g. the hole pattern for a plurality of drilling operations) which are stored in memory may simply be rotated or transformed in machine space into proper alignment and orientation with the actual location of the track assembly on the workpiece using standard transformation matrix algorithms. In this way, the accuracy, consistency, and efficiency of the manufacturing operations on the workpiece may be improved, and the costs associated with performing, inspecting, and reworking the workpiece may be reduced.

The manufacturing assembly 500 having the position sensor assembly 540 further provides the capability to detect an index feature on the workpiece 20 without the need for
physical contact between contact sensors, feeler gauges, or other physical contact devices on the carriage assembly 520 and corresponding contact features on the workpiece 20. The sensor element may detect the index feature from a distance away from the index feature, thereby eliminating any need for physical contact between the sensor element and the index feature. Because there is no physical contact, the position sensor assembly may provide improved performance over alternate sensor systems that require physical contact and that may be bent, damaged, or otherwise degraded during transport, storage, or during the performance of manufacturing operations. In this way, the position sensor assembly may improve the accuracy of the manufacturing processes, and may reduce the labor associated with the process of orienting the manufacturing assembly on the workpiece. Also, the position sensor assembly may advantageously reduce or eliminate the possibility of damage to the surface of the workpiece that may otherwise be caused by physical contact with the surface, reducing the need for repairs and reworking of the workpiece. Thus, the overall efficiency and throughput of the manufacturing operation may be improved.

It may be appreciated that a variety of alternate embodiments of apparatus and methods may be conceived in accordance with the present invention, and that the invention is not limited to the particular apparatus and methods described above and shown in the accompanying figures. For example, it may be noted that the carriage assembly 520 and the track assembly 510 may assume a wide variety of alternate embodiments, including, for example, the rail and carriage assemblies taught by U.S. Patent No. 4,850,763 issued to Jack et al, and any of the carriage assemblies and track assemblies disclosed in co-pending, commonly owned U.S. Patent Application No. 10/016,524.

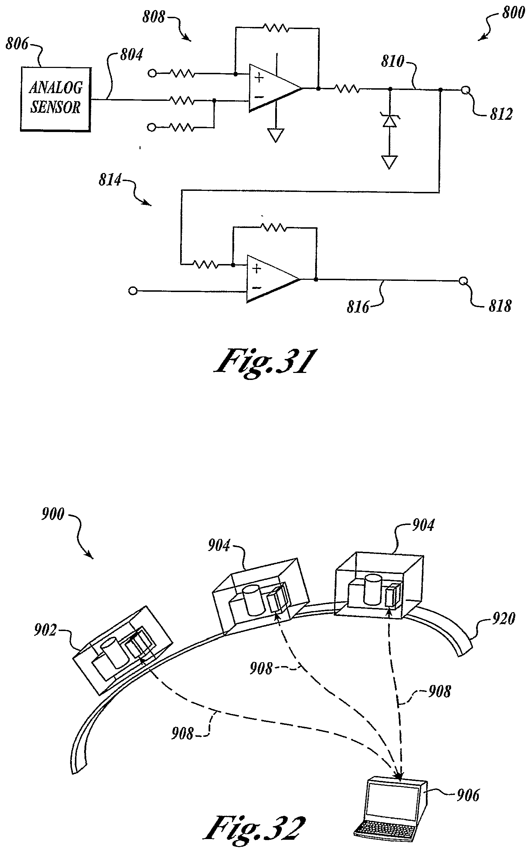

In another aspect, a control circuit 800 may be employed that receives and enhances an output signal of an analog sensor of the position sensor assembly 540. For example, FIGURE 31 is a sensing circuit 800 for performing a position determination in accordance with another alternate embodiment of the invention. In this embodiment, the sensing circuit 800 includes a comparator stage whereby an output signal 804 of an analog sensor 806 is made to function as a digital proximity sensor simultaneously with its use as an analog sensor. As shown in FIGURE 31, the output signal 804 is fed into a first circuit portion 808 configured to provide a gain and level shift stage. The first circuit portion 808 may provide an optimal response for different types of workpiece surfaces. A conditioned analog signal 810 output by the first circuit portion 808 is provided to the controller 530 on an analog output node 812. Similarly, the conditioned analog signal 810 output by the first circuit portion 808 is provided as an input to a second circuit portion 814. The second circuit portion 814 is configured as a threshold comparator stage which trips above or below a given signal voltage, providing an appropriate digital signal 816 on a digital output node 818. The gain, offset, and threshold values of the sensing circuit 800 may be predetermined constants, or may be programmable by the controller 530 according to varying operating conditions.

Manufacturing assemblies that includes the sensing circuit 800 may provide improved position accuracy over alternate systems. Because the sensing circuit 800 may receive an analog signal from the sensing element and provides both a conditioned analog output and a digital output, the sensing circuit may provide a capability of cross-checking the results of the position detection of an index feature by enabling the controller to compare and utilize both analog and digital output signals. The sensing circuit 800 may also provide improved versatility by enabling the position sensor assembly to be utilized with both analog or digital controllers or other desired electronic components.

It may be appreciated that the various operations of the manufacturing assembly 500 may be controlled by the controller 530, including the positioning of the carriage assembly 520 on the track assembly 510, the operations of the position sensor assembly 540, and the positioning and engagement of the tool assembly 550 with respect to the workpiece 20. These operations may be accomplished in an automated or semi-automated manner using the controller 534 equipped with computerized numerically-controlled (CNC) methods and algorithms. Alternately, the positioning may be performed manually or partially-manually by an operator, such as, for example, by having the operator provide manual control inputs to the controller 534, or by temporarily disabling or neutralizing the above-referenced motors and actuators of the carriage and clamp-up assemblies 520, 560 to permit manual movement.

Typically, to provide a desired degree of positional accuracy for performing manufacturing operations, the index centers of two index features 21 may be determined using the methods and apparatus described above. After the one or more index centers of the index features 21 have been determined, control algorithms of the manufacturing assembly 500 may be used to transform a data pattern stored in a memory of a control system *(e.g.* in the controller 530) into machine space for controlling the manufacturing operations performed by the manufacturing assembly 500 on the workpiece 20. These transformations may be performed using standard, well-known mathematical algorithms commonly employed in presently-existing CNC machining processes.

Referring again to FIGURES 23 through 25, in yet another aspect, the controller 530 may include an entire CNC control system. For example, in one particular embodiment, the controller 530 includes an 8-axis servo-controller, and a plurality of servo-amplifiers, servomotors, and air solenoids. Because the controller 530 is attached directly to the carriage assembly 520 *(e.g.* to the y-axis carriage 50), the controller 530 travels with the carriage assembly 520 during the performance manufacturing operations. Thus, the links or cables between the controller 530 and the other components of the manufacturing assembly 500 for transmitting control signals to (and receiving feedback signals from) the drive motors 40, 60 of the carriage assembly 520, the position sensor assembly 540, the tool assembly 550, and any other components of the manufacturing assembly, are greatly reduced or eliminated. A controller umbilical 532 (FIGURE 23) may provide control air, electrical power, and communication cables from a supply unit 534 to the controller 530. Alternately, the controller umbilical 532 may also provide high-volume fluid (e.g. air or hydraulics) for powering the tool assembly 550.

The manufacturing assembly 500 having the controller 530 mounted to the carriage assembly 520 may further improve the efficiency and throughput of the manufacturing operations. Because the controller 530 is mounted on the carriage assembly 520, the amount of cables extending between the controller 530 and the portions of the carriage assembly (e.g. the drive assembly, the position sensor assembly, etc.) and the tool assembly 550 may be reduced compared with prior art manufacturing assemblies. Thus, the manufacturing assembly may provide improved mobility of the carriage assembly over the track assembly because the movement of the carriage assembly is not limited by the lengths of the control cables extending between the carriage assembly to a remotely-located controller, or by the mobility of a remotely-located controller within the confines of the manufacturing environment. The combination of the carriage assembly 520 and the controller 530 may even allow for a single operator to move these components between various locations to conduct manufacturing operations at different locations or on different workpieces, thereby further improving the efficiency and throughput of the manufacturing process.

FIGURE 32 is a schematic representation of a manufacturing assembly 900 in accordance with yet another embodiment of the invention. In this embodiment, the manufacturing assembly 900 includes a sensor unit 902 and a pair of tool units 904 operating on a track assembly 510 (not visible) that is coupled to a contoured workpiece 920. The sensor and tool units 902, 904 each include a carriage assembly as described above. The sensor unit 902 also includes a position sensor assembly 540, while the tool units 904 include a tool assembly 550. The sensor and tool units 902, 904 are operatively coupled to a master controller 906, such as by wireless or hardwired communication links 908. The sensor and tool units 902, 904 may also include a controller 530, as described above.

In operation, each of the sensor and tool units 902, 904 may operate autonomously under the control of their respective controllers 530, or semi-autonomously under the control of both the controller 530 and the master controller 906, or may be fully controlled by the master controller 906. In one embodiment, the sensor unit 902 may perform the function of locating various indexing features distributed over the workpiece 920 in the manner described above, which information may be transmitted to the master controller 906. The master controller 906 may then provide command and control signals to one or more tool units 904 to precisely position the tool units 904 and to perform the desired manufacturing operations on the workpiece 920. Alternately, the locations of the indexing features may be transmitted from the sensor unit 902 directly to one or more of the tool units 904, and the tool units 904 may operate autonomously to perform the desired manufacturing operations at the appropriate locations on the workpiece 920. After locating the indexing features on a first portion of the workpiece 920, the sensor unit 902 may move automatically to a next portion, or may be commanded to proceed to the next portion of the workpiece 920 by the master controller 906 to make room for the tool units 904 or to locate additional index features.

The manufacturing assembly 900 may further improve the efficiency and throughput of manufacturing operations. As noted above, because the controller 530 of each unit 902, 904 is mounted to the carriage assembly 520, the number of cables and wires associated with each unit 902, 904 may be reduced, thereby improving the mobility of each unit over the workpiece 920. Because the need for cables extending between each of the units 902, 904 and a remotely-located controller may be reduced, the number of different units 902, 904 that may be located and operated in relatively close proximity on a single track assembly may be increased. Thus, the efficiency and throughput of manufacturing operations may be improved.

### Servo-Controlled Manufacturing Operations

Referring again to FIGURE 24, in one particular embodiment, a manufacturing assembly 500 in accordance with the present invention includes a track assembly 510 controllably attachable to a workpiece 20, and a carriage assembly 520 moveably coupled to the track assembly 510. A controller 530 is mounted on the carriage assembly and is operatively coupled to the servo-controlled tool assembly 550 and to the carriage assembly 520. Again, it will be appreciated that the track assembly 510 and the carriage assembly 520 are substantially similar to the track and carriage assembly embodiments described above with respect to FIGURES 9-11. As described more fully below, the manufacturing assembly 500 having the servo-controlled tool assembly 550 may advantageously improve the accuracy and efficiency of manufacturing operations performed on the workpiece 20.

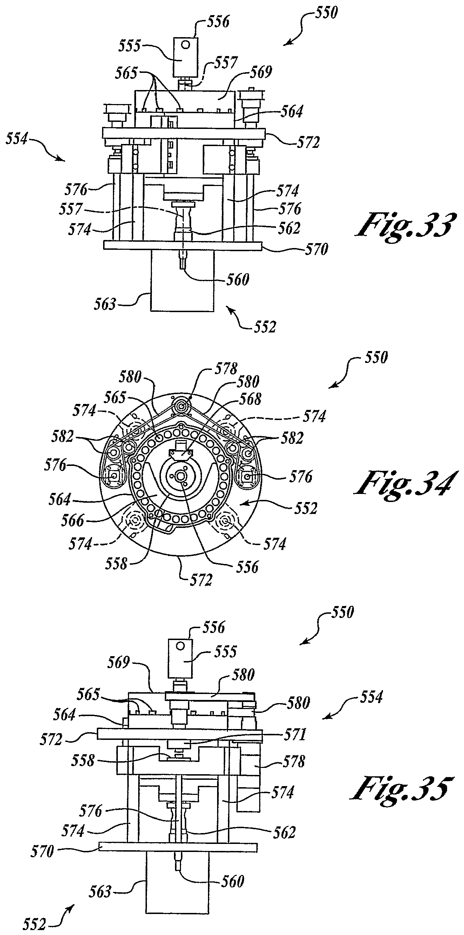

FIGURE 33 is an enlarged, front elevational view of the servo-controlled tool assembly 550 of the manufacturing assembly 500 of FIGURE 24. FIGURES 34 and 35 are exposed top and side elevational views, respectively, of the servo-controlled tool assembly 550 of FIGURE 33. In this embodiment, the tool assembly 550 includes a drill spindle module 552 and a drive unit (or feed unit) 554. The drill spindle module 552 includes a centrally-disposed motor shaft 556 having armature windings 558 (FIGURE 34) disposed thereon. The motor shaft 556 includes a drill holding collet 562 that holds a drill member 560 that may be engaged with the workpiece 20.

The motor shaft 556 further includes a lubrication reservoir 555 positioned at the upper end of the motor shaft 556 and a lubrication channel 557 (FIGURE 33) extending longitudinally through the length of the motor shaft 556 from the lubrication reservoir 555 to the drill member 560 to enable lubricant to be applied through the shaft 556 to the drill member 560. A pilot bushing 563 extends downwardly about the drill member 560 and securely engages against the workpiece 20 during a manufacturing operation. A spindle motor housing 564 having a plurality of air cooling ports 565 is disposed about the motor shaft 556, and a field assembly 566 (FIGURE 34) is positioned within the motor housing 564 and proximate to the armature windings 558 of the motor shaft 556. The field assembly 566 may include one or more rare earth permanent magnets that, in combination with the armature windings 558, provide a lightweight brushless motor. A top cover 569 (removed in the partially-exposed view in FIGURE 34) covers the upper portion of the spindle motor housing 564. As further shown in FIGURE 34, a drill speed encoder 568 is mounted on the motor shaft 556.

With continued reference to FIGURES 33-35, the drive unit 554 of the tool assembly 550 includes a base member 570 slideably coupled to a drive platform 572 by four circumferentially-spaced guide rods 574. In this embodiment, the drive platform 572 is coupled to the drill spindle module 552 while the base member 570 is coupled to the carriage assembly 520. The motor shaft 556 of the drill spindle module 552 is rotatably mounted through the base member 570 and the drive platform 572 by a rotary bearing 571. Although the motor housing 564 (and field assembly 566) are shown in the accompanying figures as being coupled to the drive platform 572, in alternate embodiments, the motor housing 564 may be coupled to the base member 570, or to both the base member and the drive platform 572.

As best shown in FIGURE 33, the drive unit (or feed unit) 554 includes two ball screws 576 that extend between the base member 570 and the drive platform 572. A servo motor 578 is mounted to the drive platform 572 and is coupled to each of the ball screws 576 by a drive belt 580 (FIGURE 35). As shown in FIGURE 34, the drive belts 580 are engaged over a plurality of belt tensioners 582 that help to maintain positive engagement of the drive belts 580 with the ball screws 576. The servo motor 578 and the drill spindle module 552, including the drill speed encoder 568, are operatively coupled to the controller 530.

In operation, the carriage assembly 520 is positioned in a desired location over the workpiece 20 in the manner described above. The drive unit 554 of the tool assembly 550 may then be activated by the controller 530, causing the servo motor 578 to drive the ball screws 576, propelling the drive platform 572 toward the base member 570, and thus, driving the drill spindle module 552 toward the workpiece 20 and engaging the pilot bushing 563 with the workpiece 20. Similarly, the drill spindle module 552 may be activated to ready the drill member 560 for engagement with the workpiece 20. As the drive unit 554 continues to drive the drive platform 572 toward the base member 570, the drill member 560 is driven into the workpiece 20, performing the desired manufacturing operation on the workpiece 20. After the manufacturing operation is performed, the controller 530 may transmit appropriate control signals to the servo motor 578 to rotate the ball screws 576 in the opposite direction, thereby drawing the drive platform 572 away from the base member 570 and withdrawing the drill spindle module 552 from the workpiece 20. The carriage assembly 520 may then be repositioned at a new location, and the process repeated as desired.

Manufacturing assemblies having servo-controlled tool assemblies in accordance with the teachings of the present invention may advantageously improve the quality and efficiency of manufacturing operations on a workpiece. For example, the servo-controlled tool assembly 550 in accordance with the present invention provides an extremely lightweight manufacturing apparatus. Specifically, because the tool assembly 550 combines a field assembly 566 that may include one or more rare earth magnets with the armature windings 558 on the motor shaft 556 to provide a brushless motor, the tool assembly 550 may be considerably lighter than prior art, pneumatically-driven tool assemblies. Additional weight savings are achieved by providing the motor shaft 556 that incorporates the drill holding collet 562, and that includes the internal lubricant channel 557. Furthermore, all of the components of the drill spindle module 552, including the frameless motor, are provided on one shaft and share one set of rotary bearings. Thus, servo-controlled tool assemblies in accordance with the teachings of the present invention may be substantially lighter than prior art tool assemblies, providing improved controllability and accuracy during manufacturing operations. Also, because the tool assemblies are more lightweight, the setup and tear-down of the manufacturing assembly 500 may be simplified, and the efficiency and throughput of the manufacturing operations may be improved.

Furthermore, because the feed rate of the drive unit 554 may be precisely controlled via the servo motor 578, the servo-controlled tool assembly 550 may provide improved performance over prior art tool assemblies. For example, by monitoring the rotational speed of the motor shaft 556 via the speed encoder 568, the controller 530 may transmit appropriate control signals to the servo motor 578 (or to the drill spindle module 552) to provide a desired relationship between the rotational speed of the shaft and the feed rate of the drill spindle module 552. In one embodiment, for example, the controller 530 may carefully control the feed rate and/or the rotational speed of the drill spindle module 552 to provide a maximum drilling rate into the workpiece. Alternately, the controller 530 may control the tool assembly to maintain a desired workload on the drill spindle module 552, or to provide the highest quality drilling operation. The enhanced controllability of the servo-controlled tool assembly 550 may be particularly effective in cases where the physical characteristics of the workpiece 20 are variable, such as for a workpiece 20 that includes a plurality of layers of different materials having differing hardness values. In this case, the controller 530 may quickly and efficiently adjust the feed rate provided by the servo motor 578 to maintain the desired drilling speed of the drill spindle module 552. Thus, using servo-controlled tool assemblies in accordance with the present invention, both the drill speed and the feed rate may be precisely controlled to provide optimal performance and to improve manufacturing throughput.

It may be appreciated that a variety of alternate embodiments of apparatus and methods may be conceived in accordance with the present invention, and that the invention is not limited to the particular apparatus and methods described above and shown in the accompanying figures. For example, it may be noted that the carriage assembly 520 and the track assembly 510 may assume a wide variety of alternate embodiments, including, for example, the rail and carriage assemblies taught by U.S. Patent No. 4,850,763 issued to Jack et al*,* and any of the carriage assemblies and track assemblies disclosed in co-pending, commonly owned U.S. Patent Application No. 10/016,524.

It may also be noted that in alternate embodiments, the drill spindle module 552 may be replaced with a wide variety of manufacturing tools to perform any desired manufacturing operation on the workpiece 20. In alternate embodiments, for example, the drill spindle module 552 may be replaced with one or more riveters, mechanical and electro-magnetic dent pullers, welders, wrenches, clamps, sanders, nailers, screw guns, routers, degreasers, washers, etchers, deburring tools, lasers, tape applicators, or virtually any other desired type of manufacturing tools or measuring instruments.

### Conclusion

While specific embodiments of the invention have been illustrated and described wherein, as noted above, many changes can be made without departing from the spirit and scope of the invention. Accordingly, the scope of the invention should not be limited by the disclosure of the specific embodiments set forth above. Instead, the invention should be determined entirely by reference to the claims that follow.

The present invention comprises the aspects defined in the following clauses which form part of the present description, but are not claims, in accordance with decision J15/88 of the Legal Board of Appeal of the European Patent Office.
(1) An apparatus for supporting a tool relative to a surface of a workpiece, the apparatus comprising:
   a base adapted to be attached to the workpiece;
   a tool support coupled to the base and moveable along a translation axis relative to the workpiece; and
   a biasing device operatively coupled to at least one of the base and the tool support, the biasing device being adapted to at least partially counterbalance a force exerted on the tool support along the translation axis.
(2) The apparatus of clause1, wherein the translation axis has at least a component that is perpendicular to a local normal to the surface of the workpiece.
(3) The apparatus of clause 1, wherein the tool support is slideably coupled to the base along a guide rail.
(4) The apparatus of clause 1, wherein the tool support is moveable in first and second directions along the translation axis.
(5) The apparatus of clause 1, wherein the biasing device includes a pneumatic actuator.
(6) The apparatus of clause 1, wherein the biasing device includes a motor.
(7) The apparatus of clause 1, wherein the biasing device includes a constant torque motor.
(8) The apparatus of clause 1, wherein the biasing axis is aligned with the translation axis.
(9) The apparatus of clause 1, wherein the biasing device is controllably biasable in a biasing direction along the biasing axis.
(10) The apparatus of clause 1, wherein the base includes:
   at least one elongated rail member coupleable to the surface of the workpiece; and
   a carriage assembly moveably coupled to the at least one rail member, the tool support being coupled to the carriage assembly.
(11) The apparatus of clause 10, wherein the translation direction is at least partially transverse to the at least one elongated rail member.
(12) The apparatus of clause 10, wherein the carriage assembly includes a drive assembly having a drive motor operatively engaging the at least one rail member and adapted to drive the carriage assembly along the at least one rail member.
(13) The apparatus of clause 1, wherein the base includes:
   first and second elongate flexible rails, the rails being spaced apart and approximately parallel to each other;
   a plurality of vacuum attachment devices connected to each rail and spaced at intervals therealong for releasably attaching each rail to the surface of the workpiece by vacuum; and
   a carriage coupled to the tool support and moveably engaging the rails, the carriage being moveable along the rails to position the tool support at various locations relative to the workpiece.
(14) An assembly for performing a manufacturing operation on a surface of a workpiece, the assembly comprising:
   a base adapted to be attached to the workpiece; a tool support coupled to the base and moveable along a translation axis relative to the workpiece;
   a manufacturing tool coupled to the tool support and adapted to be engageable with the surface of the workpiece to perform the manufacturing operation on the surface of the workpiece; and
   a biasing device operatively coupled to at least one of the base and to the tool support, the biasing device being adapted to at least partially counterbalance a force exerted on the tool support along the translation axis.
(15) The assembly of clause 14, wherein the translation axis has at least a component that is perpendicular to a local normal to the surface of the workpiece.
(16) The apparatus of clause 14, wherein the tool support is slideably coupled to the base along a guide rail.
(17) The apparatus of clause 14, wherein the tool support is moveable in first and second directions along the translation axis.
(18) The apparatus of clause 14, wherein the biasing device includes a pneumatic actuator.
(19) The apparatus of clause 14, wherein the biasing device includes a motor.
(20) The apparatus of clause 14, wherein the biasing device includes a constant torque motor.
(21) The apparatus of clause 14, wherein the biasing axis is aligned with the translation axis.
(22) The apparatus of clause 14, wherein the biasing device is controllably biasable in a biasing direction along the biasing axis.
(23) The apparatus of clause 14, wherein the base includes: at least one elongated rail member coupleable to the surface of the workpiece; and
   a carriage assembly moveably coupled to the at least one rail member, the tool support being coupled to the carriage assembly.
(24) The apparatus of clause 23, wherein the translation direction is at least partially transverse to the at least one elongated rail member.
(25) The apparatus of clause 23, wherein the carriage assembly includes a drive assembly having a drive motor operatively engaging the at least one rail member and adapted to drive the carriage assembly along the at least one rail member.
(26) The assembly of clause 14, wherein the base includes:
   first and second elongate flexible rails, the rails being spaced apart and approximately parallel to each other;
   a plurality of vacuum attachment devices connected to each rail and spaced at intervals therealong for releasably attaching each rail to the surface of the workpiece by vacuum; and a carriage coupled to the tool support and moveably engaging the rails, the carriage being moveable along the rails to position the tool support at various locations relative to the workpiece.
(27) The assembly of clause 14, wherein the manufacturing tool includes a drill and the manufacturing operation includes a drilling operation.
(28) A method of performing a manufacturing operation on a surface of a workpiece, the method comprising:
   moveably supporting a manufacturing tool proximate a surface of the workpiece, the manufacturing tool being moveable along a translation direction over the surface of the workpiece; and
   providing a biasing force in a biasing direction using a biasing device, the biasing direction being substantially parallel to the translation direction.
(29) The method of clause 28, wherein moveably supporting a manufacturing tool proximate a surface of the workpiece includes slideably supporting the manufacturing tool on a guide rail positioned proximate the surface of the workpiece, the manufacturing tool being moveable in a first translation direction along the guide rail, and also in a second translation direction opposingly oriented to the first translation direction.
(30) The method of clause 28, wherein providing a biasing force in a biasing direction using a biasing device includes providing a biasing force that is adapted to counterbalance a force exerted on the manufacturing tool along the translation direction.
(31) The method of clause 30, wherein providing a biasing force that is adapted to counterbalance a force exerted on the manufacturing tool includes providing a biasing force that is adapted to counterbalance a gravitational force exerted on the manufacturing tool.
(32) The method of clause 28, wherein providing a biasing force in a biasing direction using a biasing device includes providing a biasing force that is oriented opposite to the translation direction.
(33) The method of clause 28, wherein providing a biasing force in a biasing direction using a biasing device includes providing a biasing force in a biasing direction using a biasing cylinder.
(34) The method of clause 28, wherein providing a biasing force in a biasing direction using a biasing device includes providing a biasing force in a biasing direction using a motor.
(35) The method of clause 28, further comprising moving the manufacturing tool along the translation direction.
(36) The method of clause 28, further comprising performing the manufacturing operation with the manufacturing tool on the surface of the workpiece.
(37) The method of clause 36, wherein the manufacturing tool includes a drill and the manufacturing operation includes a drilling operation.
(38) A method of performing a manufacturing operation on a surface of a workpiece, the method comprising:
   detachably securing a support member to the surface of the workpiece;
   moveably attaching a manufacturing tool to the support member, the manufacturing tool being moveable relative to the support member along a translation direction over the surface of the workpiece;
   securely engaging the manufacturing tool with the surface of the workpiece; and
   with the manufacturing tool securely engaged with the surface of the workpiece, detaching the support member from the surface of the workpiece; and
   with the manufacturing tool securely engaged with the surface of the workpiece, moving the support member relative to the manufacturing tool.
(39) The method of clause 38, wherein detachably securing a support member to the surface of the workpiece includes detachably securing a pair of elongated rail members to the surface of the workpiece.
(40) The method of clause 38, wherein detachably securing a support member to the surface of the workpiece includes providing a vacuum to a vacuum assembly to detachably secure the support member to the surface of the workpiece.
(41) The method of clause 38, wherein moving the support member relative to the manufacturing tool includes moving the support member along an x-axis relative to the manufacturing tool, the x-axis being approximately perpendicular with the translation direction.
(42) The method of clause 38, wherein moving the support member relative to the manufacturing tool includes moving the support member along an x-axis relative to the manufacturing tool, the x-axis being approximately perpendicular with the translation direction and with a local normal to the surface of the workpiece.
(43) An apparatus for supporting a manufacturing tool relative to a workpiece, the apparatus comprising:
   a track assembly adapted to be attached to the workpiece;
   a carriage moveably coupled to the track assembly and moveable relative to the workpiece along a translation axis, the carriage including a tool support adapted to receive and support a manufacturing tool; and
   an opposing-force support assembly operatively coupled to the carriage and adapted to be secured to the workpiece to at least partially counterbalance a manufacturing force exerted on the workpiece by the manufacturing tool.
(44) The apparatus of clause 43, wherein the opposing-force support assembly includes a clamp-up pin adapted to engage a hole in the workpiece, and a clamp-up actuator operatively coupled to the clamp-up pin and adapted to actuate the clamp-up pin into secure engagement with the workpiece.
(45) The apparatus of clause 43, wherein the opposing-force support assembly includes a vacuum cup assembly adapted to secure to a surface of the workpiece.
(46) The apparatus of clause 43, wherein the opposing-force support assembly includes a threaded pin adapted to threadedly engage a threaded hole in the workpiece.
(47) The apparatus of clause 43, wherein the opposing-force support assembly includes:
   a first member moveably coupled to the carriage and moveable along a first axis;
   a first actuator coupled to the first member and to the carriage and adapted to move the first member along the first axis;
   a second member moveably coupled to the first member and moveable along a second axis orthogonally oriented with respect to the first axis;
   a second actuator coupled to the second member and to the first member and adapted to move the second member along the second axis; and
   a securing device coupled to the second member and adapted to be secured to the workpiece.
(48) The apparatus of clause 47, wherein the securing device is coupled to the second member by a third actuator, the third actuator being adapted to mover the securing device along a third axis orthogonally oriented to the first and second axes.
(49) The apparatus of clause 48, wherein the second axis is approximately parallel with the translation axis of the carriage, and wherein the first axis is adapted to be approximately parallel with a longitudinal axis of the manufacturing tool.
(50) The apparatus of clause 49, wherein the first member is moveably coupled to a pair of elongated members on the carriage, the elongated members being adapted to be approximately parallel with a longitudinal axis of the manufacturing tool.
(51) The apparatus of clause 49, wherein the second member is moveably coupled to a pair of elongated members on the first member, the elongated members being adapted to be approximately parallel with the translation axis of the carriage.
(52) The apparatus of clause 43, wherein the track assembly includes at least one rail, and wherein the carriage is rollably coupled to the rail.
(53) The apparatus of clause 43, wherein the carriage includes an x-axis portion moveably coupled to the track assembly, and a y-axis portion moveably coupled to the x-axis portion and moveable with respect to the x-axis portion along a y-axis oriented transversely to the translation axis.
(54) The apparatus of clause 43, wherein the carriage includes a drive assembly having a drive motor operatively engaging the track assembly and adapted to drive the carriage along the track assembly.
(55) An assembly for performing a manufacturing operation on a workpiece, the assembly comprising:
   a track assembly adapted to be attached to the workpiece;
   a carriage moveably coupled to the track assembly and moveable relative to the workpiece along a translation axis, the carriage including a tool support adapted to receive and support a manufacturing tool;
   a manufacturing tool coupled to the tool support and adapted to be engageable with the workpiece to perform the manufacturing operation on the workpiece; and
   an opposing-force support assembly operatively coupled to the carriage and adapted to be secured to the workpiece to at least partially counterbalance a manufacturing force exerted on the workpiece by the manufacturing tool.
(56) The assembly of clause 55, wherein the opposing-force support assembly includes a clamp-up pin adapted to engage a hole in the workpiece, and a clamp-up actuator operatively coupled to the clamp-up pin and adapted to actuate the clamp-up pin into secure engagement with the workpiece.
(57) The assembly of clause 55, wherein the opposing-force support assembly includes a vacuum cup assembly adapted to secure to a surface of the workpiece.
(58) The assembly of clause 55, wherein the opposing-force support assembly includes a threaded pin adapted to threadedly engage a threaded hole in the workpiece.
(59) The assembly of clause 55, wherein the opposing-force support assembly includes:
   a first member moveably coupled to the carriage and moveable along a first axis;
   a first actuator coupled to the first member and to the carriage and adapted to move the first member along the first axis;
   a second member moveably coupled to the first member and moveable along a second axis orthogonally oriented with respect to the first axis;
   a second actuator coupled to the second member and to the first member and adapted to move the second member along the second axis; and a securing device coupled to the second member and adapted to be secured to the workpiece.
(60) The assembly of clause 59, wherein the securing device is coupled to the second member by a third actuator, the third actuator being adapted to mover the securing device along a third axis orthogonally oriented to the first and second axes.
(61) The assembly of clause 60, wherein the second axis is approximately parallel with the translation axis of the carriage, and wherein the first axis is adapted to be approximately parallel with a longitudinal axis of the manufacturing tool.
(62) The assembly of clause 61, wherein the first member is moveably coupled to a pair of elongated members on the carriage, the elongated members being adapted to be approximately parallel with a longitudinal axis of the manufacturing tool.
(63) The assembly of clause 61, wherein the second member is moveably coupled to a pair of elongated members on the first member, the elongated members being adapted to be approximately parallel with the translation axis of the carriage.
(64) The assembly of clause 55, wherein the track assembly includes at least one rail, and wherein the carriage is rollably coupled to the rail.
(65) The assembly of clause 55, wherein the carriage includes an x-axis portion moveably coupled to the track assembly, and a y-axis portion moveably coupled to the x-axis portion and moveable with respect to the x-axis portion along a y-axis oriented transversely to the translation axis.
(66) The assembly of clause 55, wherein the carriage includes a drive assembly having a drive motor operatively engaging the track assembly and adapted to drive the carriage along the track assembly.
(67) The assembly of clause 55, wherein the manufacturing tool includes a drill and the manufacturing operation includes a drilling operation.
(68) A method of performing a manufacturing operation on a workpiece, the method comprising:
   moveably supporting a manufacturing assembly proximate a surface of the workpiece, the manufacturing assembly including a manufacturing tool and an opposing-force support assembly, the manufacturing assembly being moveable along a translation direction that is at least partially along a direction perpendicular to a local normal to a surface of the workpiece;
   applying a manufacturing force against the workpiece using the manufacturing tool, the manufacturing force being at least partially along the local normal; and
   simultaneously with applying the manufacturing force against the workpiece, applying an opposing force against the workpiece using the opposing-force support assembly, the opposing force being in a direction substantially parallel with and opposite to the manufacturing force.
(69) The method of clause 68, wherein moveably supporting a manufacturing assembly proximate a surface of the workpiece includes slideably supporting the manufacturing assembly on a rail positioned proximate the surface of the workpiece.
(70) The method of clause 68, wherein applying an opposing force against the workpiece includes inserting a clamp-up pin into a hole in the workpiece and actuating a clamp-up actuator operatively coupled to the clamp-up pin.
(71) The method of clause 68, wherein applying an opposing force against the workpiece includes applying a vacuum pressure to a surface of the workpiece.
(72) The method of clause 68, wherein applying an opposing force against the workpiece includes inserting a threaded member into a threaded hole in the workpiece and actuating an actuator operatively coupled to the threaded member.
(73) The method of clause 68, wherein applying an opposing force against the workpiece includes applying an opposing force that at least approximately counterbalances the manufacturing force.
(74) The method of clause 68, further comprising moving the manufacturing tool along the translation direction simultaneously with applying the opposing force against the workpiece using the opposing-force support assembly.
(75) The method of clause 68, further comprising performing the manufacturing operation on the workpiece using the manufacturing tool.
(76) The method of clause 68, wherein the manufacturing tool includes a drill and the manufacturing operation includes a drilling operation.
(77) An apparatus for supporting a manufacturing tool relative to a workpiece, the apparatus comprising:
   a track assembly adapted to be attached to the workpiece and including at least one rail, the rail having a longitudinally-extending neutral axis and a rack extending along a pitch line that at least approximately coincides with the longitudinally-extending neutral axis.
(78) The apparatus of clause 77, wherein the rack is integrally-formed in the rail.
(79) The apparatus of clause 77, wherein the rack comprises a plurality of apertures.
(80) The apparatus of clause 77, wherein the rack comprises a plurality of apertures, at least some of the apertures being tapered, wedge-shaped apertures.
(81) The apparatus of clause 77, wherein the rack comprises a plurality of apertures, at least some of the apertures being tapered, conically-shaped apertures.
(82) The apparatus of clause 77, wherein the rail comprises a substantially flat member having a width substantially greater than a thickness of the substantially flat member, the substantially flat member being substantially stiffer in bending about a stiff axis that extends in a first direction aligned along the thickness of the substantially flat member, and being substantially more flexible in bending about a bending axis that extends in a second direction aligned along the width of the substantially flat member.
(83) The apparatus of clause 77, wherein the rail comprises a first rail and wherein the track assembly includes a second rail oriented approximately parallel to the first rail, the first and second rails each having a longitudinally-extending neutral axis and a rack, the rack extending along a pitch line that at least approximately coincides with the longitudinally-extending neutral axis.
(84) The apparatus of clause 77, wherein the track assembly includes:
   first and second elongate flexible rails, the rails being spaced apart and approximately parallel to each other; and
   a plurality of vacuum attachment devices connected to each rail and spaced at intervals therealong for releasably attaching each rail to the surface of the workpiece by vacuum, with the widths of the rails extending substantially parallel to the surface of the workpiece, the rails bending and twisting as needed to substantially follow the surface of the workpiece.
(85) The apparatus of clause 84, wherein each rail is relatively stiff in bending about a first bending axis and relatively flexible in bending about a second bending axis orthogonal to the first bending axis, and wherein each rail is mounted on the workpiece such that the first bending axis is substantially normal to the workpiece surface and the second bending axis is substantially parallel to the workpiece surface.
(86) The apparatus of clause 77, further comprising a carriage moveably coupled to the track assembly and moveable relative to the workpiece along the at least one rail, the carriage including a tool support adapted to receive and support a manufacturing tool.
(87) The apparatus of clause 86, wherein the carriage includes a drive assembly adapted to drive the carriage along the track assembly and having a drive motor coupled to a drive gear, the drive gear operatively engaging the rack.
(88) The apparatus of clause 86, wherein the rack includes a plurality of apertures and wherein the carriage includes a drive assembly adapted to drive the carriage along the track assembly and having a drive motor coupled to a drive gear, the drive gear having a plurality of teeth, at least some of the teeth operatively engaging the apertures of the rack, the apertures being adapted to match a cross-sectional profile of the teeth.
(89) The apparatus of clause 86, further comprising an opposing-force support assembly operatively coupled to the carriage and adapted to be secured to the workpiece to at least partially counterbalance a manufacturing force exerted on the workpiece by the manufacturing tool.
(90) The apparatus of clause 86, wherein the carriage includes an x-axis portion moveably coupled to the track assembly, and a y-axis portion moveably coupled to the x-axis portion and moveable with respect to the x-axis portion along a y-axis oriented transversely to the track assembly.
(91) An assembly for performing a manufacturing operation on a workpiece, the assembly comprising:
   a track assembly adapted to be attached to the workpiece and including at least one rail, the rail having a longitudinally-extending neutral axis and a rack extending along a pitch line that at least approximately coincides with the longitudinally-extending neutral axis;
   a carriage moveably coupled to the track assembly and moveable relative to the workpiece along the track assembly, the carriage including a tool support adapted to receive and support a manufacturing tool; and
   a manufacturing tool coupled to the tool support and adapted to be engageable with the workpiece to perform the manufacturing operation on the workpiece.
(92) The assembly of clause 91, wherein the rack is integrally-formed in the rail.
(93) The assembly of clause 91, wherein the rack comprises a plurality of apertures.
(94) The assembly of clause 91, wherein the rack comprises a plurality of apertures, at least some of the apertures being tapered, wedge-shaped apertures.
(95) The assembly of clause 91, wherein the rack comprises a plurality of apertures, at least some of the apertures being tapered, conically-shaped apertures.
(96) The assembly of clause 91, wherein the rail comprises a substantially flat member having a width substantially greater than a thickness of the substantially flat member, the substantially flat member being substantially stiffer in bending about a stiff axis that extends in a first direction aligned along the thickness of the substantially flat member, and being substantially more flexible in bending about a bending axis that extends in a second direction aligned along the width of the substantially flat member.
(97) The assembly of clause 91, wherein the rail comprises a first rail and wherein the track assembly includes a second rail oriented approximately parallel to the first rail, the first and second rails each having a longitudinally-extending neutral axis and a rack, the rack extending along a pitch line that at least approximately coincides with the longitudinally-extending neutral axis.
(98) The assembly of clause 91, wherein the track assembly includes:
   first and second elongate flexible rails, the rails being spaced apart and approximately parallel to each other; and
   a plurality of vacuum attachment devices connected to each rail and spaced at intervals therealong for releasably attaching each rail to the surface of the workpiece by vacuum, with the widths of the rails extending substantially parallel to the surface of the workpiece, the rails bending and twisting as needed to substantially follow the surface of the workpiece.
(99) The assembly of clause 98, wherein each rail is relatively stiff in bending about a first bending axis and relatively flexible in bending about a second bending axis orthogonal to the first bending axis, and wherein each rail is mounted on the workpiece such that the first bending axis is substantially normal to the workpiece surface and the second bending axis is substantially parallel to the workpiece surface.
(100) The assembly of clause 91, wherein the carriage includes a drive assembly adapted to drive the carriage along the track assembly and having a drive motor coupled to a drive gear, the drive gear operatively engaging the rack.
(101) The assembly of clause 91, wherein the rack includes a plurality of apertures and wherein the carriage includes a drive assembly adapted to drive the carriage along the track assembly and having a drive motor coupled to a drive gear, the drive gear having a plurality of teeth, at least some of the teeth operatively engaging the apertures of the rack, the apertures being adapted to match a cross-sectional profile of the teeth.
(102) The assembly of clause 91, further comprising an opposing-force support assembly operatively coupled to the carriage and adapted to be secured to the workpiece to at least partially counterbalance a manufacturing force exerted on the workpiece by the manufacturing tool.
(103) The assembly of clause 91, wherein the carriage includes an x-axis portion moveably coupled to the track assembly, and a y-axis portion moveably coupled to the x-axis portion and moveable with respect to the x-axis portion along a y-axis oriented transversely to the track assembly.
(104) The assembly of clause 91, wherein the manufacturing tool includes a drill and the manufacturing operation includes a drilling operation.
(105) A method of performing a manufacturing operation on a workpiece, the method comprising:
   attaching a track assembly to the workpiece, the track assembly including at least one rail having a longitudinally-extending neutral axis and a rack extending along a pitch line that at least approximately coincides with the longitudinally-extending neutral axis;
   moveably supporting a manufacturing tool on the track assembly;
   engaging a drive apparatus with the rack; and
   driving the manufacturing tool along the track assembly using the drive apparatus.
(106) The method of clause 105, wherein attaching a track assembly to the workpiece includes applying a suction force against the workpiece with the track assembly.
(107) The method of clause 105, wherein attaching a track assembly to the workpiece includes attaching a track assembly having at least one rail that includes a rack integrally- formed in the rail.
(108) The method of clause 105, wherein attaching a track assembly to the workpiece includes attaching a track assembly having at least one rail that includes a rack comprising a plurality of apertures.
(109) The method of clause 105, wherein attaching a track assembly to the workpiece includes attaching a track assembly having at least one rail that includes a rack comprising a plurality of apertures, at least some of the apertures being tapered, wedge-shaped apertures.
(110) The method of clause 105, wherein attaching a track assembly to the workpiece includes attaching a track assembly having at least one rail that includes a rack comprising a plurality of apertures, at least some of the apertures being tapered, conically-shaped apertures.
(111) The method of clause 105, wherein attaching a track assembly to the workpiece includes attaching a track assembly having at least one rail, wherein the rail comprises a substantially flat member having a width substantially greater than a thickness of the substantially flat member, the substantially flat member being substantially stiffer in bending about a stiff axis that extends in a first direction aligned along the thickness of the substantially flat member, and being substantially more flexible in bending about a bending axis that extends in a second direction aligned along the width of the substantially flat member.
(112) The method of clause 105, wherein moveably supporting a manufacturing tool on the track assembly includes moveably coupling a carriage to the track assembly, the carriage including a tool support adapted to receive and support a manufacturing tool.
(113) The method of clause 105, wherein moveably supporting a manufacturing tool on the track assembly includes moveably coupling a carriage to the track assembly, the carriage including a drive assembly adapted to drive the carriage along the track assembly and having a drive motor coupled to a drive gear, the drive gear operatively engaging the rack.
(114) The method of clause 105, wherein engaging a drive apparatus with the rack includes engaging at least one tooth with at least one aperture, the aperture being adapted to match a cross-sectional profile of the tooth.
(115) The method of clause 105, further comprising performing a manufacturing operation on the workpiece using the manufacturing tool.
(116) The method of clause 115, wherein performing a manufacturing operation includes performing a drilling operation.
(117) The method of clause 105, further comprising applying an opposing force against the workpiece using an opposing-force support assembly, the opposing force being in a direction substantially opposing a manufacturing force exerted against the workpiece during a manufacturing operation.
(118) The method of clause 105, further comprising simultaneously with applying an opposing force, performing a manufacturing operation on the workpiece using the manufacturing tool.
(119) An apparatus for performing a manufacturing operation on a workpiece, the apparatus comprising:
   a track assembly adapted to be attached to the workpiece;
   a carriage assembly moveably coupled to the track assembly and moveable relative to the workpiece; and
   a position sensor operatively coupled to the carriage assembly and including a sensor element adapted to be operatively positioned relative to the workpiece, the sensor element being adapted to detect at least one edge of an index feature on the workpiece from a distance away from the index feature.
(120) The apparatus of clause 119, wherein the sensor element includes a fiber optic sensing element.
(121) The apparatus of clause 119, wherein the sensor element is adapted to detect the at least one edge of the index feature as the sensor element is being moved over the workpiece by the carriage assembly.
(122) The apparatus of clause 119, further comprising a controller operatively coupled to the position sensor, the controller being adapted to receive a first edge detection signal from the position sensor indicating that a first edge of the index feature has been detected along a first path of movement of the position sensor, and to receive a second edge detection signal from the position sensor indicating that a second edge of the index feature has been detected along the first path, and to compute a midpoint location based on the first and second edge detection signals.
(123) The apparatus of clause 122, wherein the controller is further adapted to receive third and fourth edge detection signals from the position sensor indicating that third and fourth edges of the index feature have been detected along a second path of movement of the position sensor, respectively, and is also adapted to compute an estimated center of the index feature based on the first, second, third, and fourth edge detection signals.
(124) The apparatus of clause 119, further comprising a controller mounted on the carriage assembly and operatively coupled to the position sensor.
(125) The apparatus of clause 124, wherein the carriage assembly includes a drive assembly operable to translate the carriage assembly along the track assembly, the drive assembly being operatively coupled to the controller.
(126) The apparatus of clause 125, wherein the drive assembly is further operable to translate the position sensor in a direction that is transverse to the track assembly.
(127) The apparatus of clause 119, wherein the position sensor includes a sensing circuit having a first portion coupled to the sensing element, the first portion being adapted to receive an analog input signal and provide a conditioned analog output signal on a first output node, the sensing circuit further including a second portion coupled to the first portion and adapted to receive the conditioned analog output signal and to provide a digital output signal on a second output node.
(128) The apparatus of clause 127, wherein the first portion of the sensing circuit is adapted to provide a gain and level shift of the analog input signal.
(129) The apparatus of clause 127, wherein the second portion of the sensing circuit includes a threshold comparator circuit adapted to provide a first digital output signal when the conditioned analog output signal is below a threshold level, and to provide a second digital output signal when the conditioned analog output signal is above the threshold level.
(130) The apparatus of clause 127, wherein the first portion of the sensing circuit is adapted to provide a gain and level shift of the analog input signal, and wherein the second portion of the sensing circuit includes a threshold comparator circuit adapted to provide a first digital output signal when the conditioned analog output signal is below a threshold level, and to provide a second digital output signal when the conditioned analog output signal is above the threshold level, at least one of the gain and threshold level being programmable.
(131) The apparatus of clause 119, further comprising a tool assembly coupled to the carriage assembly and engageable with the workpiece to perform the manufacturing operation on the workpiece.
(132) An apparatus for performing a manufacturing operation on a workpiece, the apparatus comprising:
   a track assembly adapted to be attached to the workpiece;
   a carriage assembly moveably coupled to the track assembly and moveable relative to the workpiece; and
   a position sensor operatively coupled to the carriage assembly and including a sensor element adapted to be operatively positioned relative to the workpiece, and a sensing circuit having a first portion coupled to the sensing element, the first portion being adapted to receive an analog input signal and provide a conditioned analog output signal on a first output node, the sensing circuit further including a second portion coupled to the first portion and adapted to receive the conditioned analog output signal and to provide a digital output signal on a second output node.
(133) The apparatus of clause 132, wherein the first portion of the sensing circuit is adapted to provide a gain and level shift of the analog input signal.
(134) The apparatus of clause 132, wherein the second portion of the sensing circuit includes a threshold comparator circuit adapted to provide a first digital output signal when the conditioned analog output signal is below a threshold level, and to provide a second digital output signal when the conditioned analog output signal is above the threshold level.
(135) The apparatus of clause 132, wherein the first portion of the sensing circuit is adapted to provide a gain and level shift of the analog input signal, and wherein the second portion of the sensing circuit includes a threshold comparator circuit adapted to provide a first digital output signal when the conditioned analog output signal is below a threshold level, and to provide a second digital output signal when the conditioned analog output signal is above the threshold level, at least one of the gain and threshold level being programmable.
(136) The apparatus of clause 132, wherein the sensor element is adapted to detect at least one edge of an index feature on the workpiece from a distance away from the index feature.
(137) The apparatus of clause 132, wherein the sensor element includes a fiber optic sensing element.
(138) The apparatus of clause 132, wherein the sensor element is adapted to detect the at least one edge of the index feature as the sensor element is being moved over the workpiece by the carriage assembly.
(139) The apparatus of clause 132, further comprising a controller operatively coupled to the position sensor, the controller being adapted to receive a first edge detection signal from the position sensor indicating that a first edge of the index feature has been detected along a first path of movement of the position sensor, and to receive a second edge detection signal from the position sensor indicating that a second edge of the index feature has been detected along the first path, and to compute a midpoint location based on the first and second edge detection signals.
(140) The apparatus of clause 139, wherein the controller is further adapted to receive third and fourth edge detection signals from the position sensor indicating that third and fourth edges of the index feature have been detected along a second path of movement of the position sensor, respectively, and is also adapted to compute an estimated center of the index feature based on the first, second, third, and fourth edge detection signals.
(141) The apparatus of clause 132, further comprising a controller mounted on the carriage assembly and operatively coupled to the position sensor.
(142) The apparatus of clause 141, wherein the carriage assembly includes a drive assembly operable to translate the carriage assembly along the track assembly, the drive assembly being operatively coupled to the controller.
(143) The apparatus of clause 142, wherein the drive assembly is further operable to translate the position sensor in a direction that is transverse to the track assembly.
(144) The apparatus of clause 132, further comprising a tool assembly coupled to the carriage assembly and operatively coupled to the controller, the tool assembly being engageable with the workpiece to perform the manufacturing operation on the workpiece.
(145) An apparatus for performing a manufacturing operation on a workpiece, the apparatus comprising:
   a track assembly adapted to be attached to the workpiece;
   a carriage assembly moveably coupled to the track assembly and including a drive assembly operable to translate the carriage assembly along the track assembly; and
   a controller mounted on the carriage assembly and operatively coupled to the drive assembly, the controller being adapted to transmit control signals to the drive assembly to control movement of the carriage assembly over the workpiece.
(146) The apparatus of clause 145, wherein the controller includes a programmable CNC system operable to automatically transmit control signals to the drive assembly to automatically control movement of the carriage assembly over the workpiece.
(147) The apparatus of clause 145, further comprising a position sensor coupled to the carriage assembly and operatively coupled to the controller, the position sensor including a sensor element adapted to be operatively positioned relative to the workpiece, and a sensing circuit having a first portion coupled to the sensing element, the first portion being adapted to receive an analog input signal and provide a conditioned analog output signal on a first output node, the sensing circuit further including a second portion coupled to the first portion and adapted to receive the conditioned analog output signal and to provide a digital output signal on a second output node.
(148) The apparatus of clause 147, wherein the first portion of the sensing circuit is adapted to provide a gain and level shift of the analog input signal.
(149) The apparatus of clause 147, wherein the second portion of the sensing circuit includes a threshold comparator circuit adapted to provide a first digital output signal when the conditioned analog output signal is below a threshold level, and to provide a second digital output signal when the conditioned analog output signal is above the threshold level.
(150) The apparatus of. clause 147, wherein the first portion of the sensing circuit is adapted to provide a gain and level shift of the analog input signal, and wherein the second portion of the sensing circuit includes a threshold comparator circuit adapted to provide a first digital output signal when the conditioned analog output signal is below a threshold level, and to provide a second digital output signal when the conditioned analog output signal is above the threshold level, at least one of the gain and threshold level being programmable.
(151) The apparatus of clause 147, further comprising a position sensor coupled to the carriage assembly and operatively coupled to the controller, the position sensor including a sensor element adapted to detect at least one edge of an index feature on the workpiece from a distance away from the index feature.
(152) The apparatus of clause 151, wherein the controller is adapted to receive a first edge detection signal from the position sensor indicating that a first edge of the index feature has been detected along a first path of movement of the position sensor, and to receive a second edge detection signal from the position sensor indicating that a second edge of the index feature has been detected along the first path, and to compute a midpoint location based on the first and second edge detection signals.
(153) The apparatus of clause 152, wherein the controller is further adapted to receive third and fourth edge detection signals from the position sensor indicating that third and fourth edges of the index feature have been detected along a second path of movement of the position sensor, respectively, and is also adapted to compute an estimated center of the index feature based on the first, second, third, and fourth edge detection signals.
(154) The apparatus of clause 147, further comprising a tool assembly coupled to the carriage assembly and operatively coupled to the controller, the tool assembly being engageable with the workpiece to perform the manufacturing operation on the workpiece.
(155) The apparatus of clause 154, wherein the carriage assembly is a first carriage assembly and the controller is a first controller, the apparatus further comprising:
   a second carriage assembly moveably coupled to the track assembly and including a second drive assembly operable to translate the second carriage assembly along the track assembly;
   a second controller mounted on the second carriage assembly and operatively coupled to the second drive assembly, the second controller being adapted to transmit control signals to the second drive assembly to control movement of the second carriage assembly over the workpiece; and
   a position sensor coupled to the carriage assembly and operatively coupled to the second controller, the position sensor including a sensor element adapted to detect at least one edge of an index feature on the workpiece from a distance away from the index feature.
(156) The apparatus of clause 155, further comprising a master controller operatively coupled to the first and second controllers and adapted to transmit control signals to the first and second controllers, and adapted to receive feedback signals from the first and second controllers.
(157) A method of performing a manufacturing operation on a workpiece, the method comprising:
   supporting a manufacturing assembly proximate a surface of the workpiece, the manufacturing assembly including a sensing element that is operatively positioned relative to and spaced apart from the workpiece, the sensing element being moveable relative to the surface of the workpiece;
   moving the sensing element along a first path on the workpiece; and
   detecting at least one edge of an index feature on the workpiece from a distance away from the index feature.
(158) The method of clause 157, wherein detecting at least one edge of an index feature on the workpiece from a distance away from the index feature includes detecting a reflected electromagnetic signal reflected from the index feature.
(159) The method of clause 157, wherein detecting at least one edge of an index feature on the workpiece from a distance away from the index feature occurs simultaneously with moving the sensing element along a first path that crosses an index feature on the workpiece.
(160) The method of clause 157, wherein detecting at least one edge of an index feature includes detecting first and second edges of the index feature along the first path, the method further comprising computing a midpoint location based on the first and second edges.
(161) The method of clause 160, further comprising detecting third and fourth edges of the index feature along a second path of movement of the position sensor, and computing an estimated center of the index feature based on the first, second, third, and fourth edges.
(162) The method of clause 157, wherein supporting a manufacturing assembly proximate a surface of the workpiece includes supporting a manufacturing assembly having a controller operatively coupled to the sensing element, and wherein moving the sensing element along a first path includes transmitting at least one control signal from the controller.
(163) The method of clause 157, wherein supporting a manufacturing assembly proximate a surface of the workpiece includes supporting a manufacturing assembly having a drive assembly operable to move the sensing element relative to the workpiece, and further having a controller mounted on the carriage assembly and operatively coupled to the drive assembly.
(164) The method of clause 157, further comprising providing at least one output signal indicating a location of the at least one edge of the index feature.
(165) The method of clause 157, wherein providing at least one output signal includes providing an analog output signal.
(166) The method of clause 157, wherein providing an analog output signal includes applying a gain and level shift of an analog input signal to provide a conditioned analog output signal.
(167) The method of clause 166, wherein providing at least one output signal further includes providing a digital output signal.
(168) The method of clause 167, wherein providing a digital signal includes providing a first digital output signal when the conditioned analog output signal is below a threshold level, and providing a second digital output signal when the conditioned analog output signal is above the threshold level.
(169) The method of clause 157, wherein supporting a manufacturing assembly proximate a surface of the workpiece includes supporting a manufacturing assembly having a tool assembly engageable with the workpiece, the method further comprising operatively engaging the tool assembly with the workpiece.
(170) A method of performing a manufacturing operation on a workpiece, the method comprising:
   supporting a manufacturing assembly proximate a surface of the workpiece, the manufacturing assembly including a sensing element that is operatively positioned relative to and spaced apart from the workpiece, the sensing element being moveable relative to the surface of the workpiece;
   moving the sensing element along a first path on the workpiece;
   detecting at least one edge of an index feature on the workpiece;
   providing a conditioned analog output signal indicating a location of the at least one edge of the index feature; and
   providing a digital output signal indicating the location of the at least one edge of the index feature.
(171) The method of clause 170, wherein providing an analog output signal includes applying a gain and level shift of an analog input signal to provide the conditioned analog output signal.
(172) The method of clause 170, wherein providing a digital signal includes providing a first digital output signal when the conditioned analog output signal is below a threshold level, and providing a second digital output signal when the conditioned analog output signal is above the threshold level.
(173) The method of clause 170, wherein providing detecting at least one edge of an index feature on the workpiece includes detecting at least one edge of an index feature on the workpiece from a distance away from the index feature.
(174) The method of clause 173, wherein detecting at least one edge of an index feature on the workpiece from a distance away from the index feature occurs simultaneously with moving the sensing element along the first path.
(175) The method of clause 173, wherein detecting at least one edge of an index feature on the workpiece from a distance away from the index feature includes detecting a reflected electromagnetic signal reflected from the index feature.
(176) The method of clause 170, wherein detecting at least one edge of an index feature includes detecting first and second edges of the index feature along the first path, the method further comprising computing a midpoint location based on the first and second edges.
(177) The method of clause 176, further comprising detecting third and fourth edges of the index feature along a second path of movement of the position sensor, and computing an estimated center of the index feature based on the first, second, third, and fourth edges.
(178) The method of clause 170, wherein supporting a manufacturing assembly proximate a surface of the workpiece includes supporting a manufacturing assembly having a controller operatively coupled to the sensing element, and wherein moving the sensing element along a first path includes transmitting at least one control signal from the controller.
(179) The method of clause 170, wherein supporting a manufacturing assembly proximate a surface of the workpiece includes supporting a manufacturing assembly having a drive assembly operable to move the sensing element relative to the workpiece, and further having a controller mounted on the carriage assembly and operatively coupled to the drive assembly.
(180) The method of clause 170, wherein supporting a manufacturing assembly proximate a surface of the workpiece includes supporting a manufacturing assembly having a tool assembly engageable with the workpiece, the method further comprising operatively engaging the tool assembly with the workpiece.
(181) A method of performing a manufacturing operation on a workpiece, the method comprising:
   supporting a manufacturing assembly proximate a surface of the workpiece, the manufacturing assembly including a track assembly attached to the workpiece and a carriage assembly moveably coupled to the track assembly, the carriage assembly having a drive assembly operable to translate the carriage assembly along the track assembly, the manufacturing assembly further including a controller mounted on the carriage assembly and operatively coupled to the drive assembly; and
   providing control signals from the controller to the drive assembly to drive the carriage assembly along the track assembly.
(182) The method of clause 181, wherein supporting a manufacturing assembly proximate a surface of the workpiece includes supporting a manufacturing assembly having a sensing element operatively positioned relative to and spaced apart from the workpiece.
(183) The method of clause 181, wherein the drive assembly is further adapted to move the sensor element relative to the carriage assembly.
(184) The method of clause 181, further comprising providing second control signals from the controller to the drive assembly to move the sensor element relative to the carriage assembly.
(185) The method of clause 181, further comprising detecting at least one edge of an index feature on the workpiece.
(186) The method of clause 185, wherein detecting at least one edge of an index feature on the workpiece includes detecting at least one edge of an index feature on the workpiece from a distance away from the index feature.
(187) The method of clause 185, wherein detecting at least one edge of an index feature on the workpiece including moving the sensing element along a first path.
(188) The method of clause 181, wherein detecting at least one edge of an index feature on the workpiece includes detecting a reflected electromagnetic signal reflected from the index feature.
(189) The method of clause 181, wherein detecting at least one edge of an index feature includes detecting first and second edges of the index feature along a first path, the method further comprising computing a midpoint location based on the first and second edges.
(190) The method of clause 189, further comprising detecting third and fourth edges of the index feature along a second path, and computing an estimated center of the index feature based on the first, second, third, and fourth edges.
(191) The method of clause 181, wherein detecting at least one edge of an index feature includes
   moving the sensing element along a first path on the workpiece;
   detecting at least one edge of an index feature on the workpiece;
   providing a conditioned analog output signal indicating a location of the at least one edge of the index feature; and
   providing a digital output signal indicating the location of the at least one edge of the index feature.
(192) The method of clause 191, wherein providing an analog output signal includes applying a gain and level shift of an analog input signal to provide the conditioned analog output signal.
(193) The method of clause 192, wherein providing a digital signal includes providing a first digital output signal when the conditioned analog output signal is below a threshold level, and providing a second digital output signal when the conditioned analog output signal is above the threshold level.
(194) The method of clause 181, wherein supporting a manufacturing assembly proximate a surface of the workpiece includes supporting a manufacturing assembly having a tool assembly engageable with the workpiece, the method further comprising operatively engaging the tool assembly with the workpiece.
(199) An apparatus for performing a manufacturing operation on a workpiece, the apparatus comprising:
   a base member;
   a drive platform spaced apart from the base member by a separation distance;
   a plurality of guide members extending between the drive platform and the base member, at least one of the drive platform and the base member being moveable along the guide members to increase or decrease the separation distance;
   at least one drive member operatively coupled between the drive platform and the base member; and
   a servo motor operatively coupled to the drive member such that as the servo motor drives the drive member, the separation distance is varied,
   further including a tool assembly coupled to the drive platform,
   wherein the drive platform includes a first annular portion and the base member includes a second annular portion, the first and second annular portions being aligned along an axis and the plurality of guide members and the at least one drive member being concentrically spaced about the first and second annular portions, and
   wherein the tool assembly extends through the first and second annular portions along the axis, wherein the tool assembly includes:
      a motor shaft extending along the axis and rotatably coupled to at least one of the drive platform and the base member;
      an armature winding disposed about at least a portion of the motor shaft; and
      a field assembly coupled to at least one of the drive platform and the base member and positioned proximate the armature winding, wherein the field assembly includes at least one rare earth magnet.
(200) An apparatus for performing a manufacturing operation on a workpiece, the apparatus comprising:
   a base member;
   a drive platform spaced apart from the base member by a separation distance;
   a plurality of guide members extending between the drive platform and the base member, at least one of the drive platform and the base member being moveable along the guide members to increase or decrease the separation distance;
   at least one drive member operatively coupled between the drive platform and the base member; and
   a servo motor operatively coupled to the drive member such that as the servo motor drives the drive member, the separation distance is varied,
   further including a tool assembly coupled to the drive platform,
   wherein the drive platform includes a first annular portion and the base member includes a second annular portion, the first and second annular portions being aligned along an axis and the plurality of guide members and the at least one drive member being concentrically spaced about the first and second annular portions, and
   wherein the tool assembly extends through the first and second annular portions along the axis, wherein the tool assembly includes:
      a motor shaft extending along the axis and rotatably coupled to at least one of the drive platform and the base member;
      an armature winding disposed about at least a portion of the motor shaft; and
      a field assembly coupled to at least one of the drive platform and the base member and positioned proximate the armature winding,
      the apparatus further including:
         a controller operatively coupled to the servo motor; and
         a speed sensor operatively coupled to the motor shaft and to the controller, the controller being adapted to receive a feedback signal from the speed sensor and to transmit a control signal to the servo motor.
(201) An apparatus for performing a manufacturing operation on a workpiece, the apparatus comprising:
   a base member;
   a drive platform spaced apart from the base member by a separation distance;
   a plurality of guide members extending between the drive platform and the base member, at least one of the drive platform and the base member being moveable along the guide members to increase or decrease the separation distance;
   at least one drive member operatively coupled between the drive platform and the base member; and
   a servo motor operatively coupled to the drive member such that as the servo motor drives the drive member, the separation distance is varied,
   further including a tool assembly coupled to the drive platform,
   wherein the drive platform includes a first annular portion and the base member includes a second annular portion, the first and second annular portions being aligned along an axis and the plurality of guide members and the at least one drive member being concentrically spaced about the first and second annular portions, and
   wherein the tool assembly extends through the first and second annular portions along the axis, wherein the tool assembly includes:
      a motor shaft extending along the axis and rotatably coupled to at least one of the drive platform and the base member;
      an armature winding disposed about at least a portion of the motor shaft; and
      a field assembly coupled to at least one of the drive platform and the base member and positioned proximate the armature winding,
      wherein the motor shaft includes a lubrication reservoir coupled at a first end thereof and a lubrication channel longitudinally extending internally therethrough.
(203) An apparatus for performing a manufacturing operation on a workpiece, the apparatus comprising:
   a base member;
   a drive platform spaced apart from the base member by a separation distance;
   a plurality of guide members extending between the drive platform and the base member, at least one of the drive platform and the base member being moveable along the guide members to increase or decrease the separation distance;
   at least one drive member operatively coupled between the drive platform and the base member; and
   a servo motor operatively coupled to the drive member such that as the servo motor drives the drive member, the separation distance is varied,
   wherein the drive platform has a first aperture disposed therethrough and the base member has a second aperture disposed therethrough, the first and second apertures being aligned along an axis, and the plurality of guide members and the at least one drive member being distributed around the first and second apertures, the apparatus further comprising a tool assembly that includes:
      a motor shaft extending along the axis and rotatably coupled to the drive platform;
      an armature winding disposed about at least a portion of the motor shaft; and
      a field assembly coupled to at least one of the drive platform and the base member and positioned proximate the armature winding, wherein the motor shaft includes a drill collet adapted to secure a drill member.
(205) An apparatus for performing a manufacturing operation on a workpiece, the apparatus comprising:
   a base member;
   a drive platform spaced apart from the base member by a separation distance;
   a plurality of guide members extending between the drive platform and the base member, at least one of the drive platform and the base member being moveable along the guide members to increase or decrease the separation distance;
   at least one drive member operatively coupled between the drive platform and the base member; and
   a servo motor operatively coupled to the drive member such that as the servo motor drives the drive member, the separation distance is varied,
   wherein the drive platform has a first aperture disposed therethrough and the base member has a second aperture disposed therethrough, the first and second apertures being aligned along an axis, and the plurality of guide members and the at least one drive member being distributed around the first and second apertures, the apparatus further comprising a tool assembly that includes:
      a motor shaft extending along the axis and rotatably coupled to the drive platform;
      an armature winding disposed about at least a portion of the motor shaft; and
      a field assembly coupled to at least one of the drive platform and the base member and positioned proximate the armature winding,
      wherein the motor shaft includes a lubrication reservoir coupled at a first end thereof and a lubrication channel longitudinally extending internally therethrough.
(206) An apparatus for performing a manufacturing operation on a workpiece, the apparatus comprising:
   a base member;
   a drive platform spaced apart from the base member by a separation distance;
   a plurality of guide members extending between the drive platform and the base member, at least one of the drive platform and the base member being moveable along the guide members to increase or decrease the separation distance;
   at least one drive member operatively coupled between the drive platform and the base member; and
   a servo motor operatively coupled to the drive member such that as the servo motor drives the drive member, the separation distance is varied,
   wherein the at least one drive member includes a ball screw.
(209) An apparatus for performing a manufacturing operation on a workpiece, the apparatus comprising:
   a track assembly adapted to be attached to the workpiece;
   a carriage assembly moveably coupled to the track assembly and moveable relative to the workpiece; and
   a tool feed unit coupled to the carriage assembly and adapted to be coupled to a tool assembly and to controllably engage the tool assembly with the workpiece, the tool feed unit including:
      a base member;
      a drive platform spaced apart from the base member by a separation distance;
      a plurality of guide members extending between the drive platform and the base member, at least one of the drive platform and the base member being moveable along the guide members to increase or decrease the separation distance;
      at least one drive member operatively coupled between the drive platform and the base member; and
      a servo motor operatively coupled to the drive member such that as the servo motor drives the drive member, the separation distance is varied,
      the apparatus further including a tool assembly coupled to the tool feed unit and adapted to be engaged with the workpiece, wherein the tool assembly includes:
   a motor shaft extending along the axis and rotatably coupled to the drive platform;
   an armature winding disposed about at least a portion of the motor shaft; and
   a field assembly coupled to at least one of the drive platform and the base member and positioned proximate the armature winding.
(210) The apparatus of clause 209, further including:
   a controller operatively coupled to the servo motor; and
   a speed sensor operatively coupled to the motor shaft and to the controller, the controller being adapted to receive a feedback signal from the speed sensor and to transmit a control signal to the servo motor.
(211) An apparatus for performing a manufacturing operation on a workpiece, the apparatus comprising:
   a track assembly adapted to be attached to the workpiece;
   a carriage assembly moveably coupled to the track assembly and moveable relative to the workpiece; and
   a tool feed unit coupled to the carriage assembly and adapted to be coupled to a tool assembly and to controllably engage the tool assembly with the workpiece, the tool feed unit including:
      a base member;
      a drive platform spaced apart from the base member by a separation distance;
      a plurality of guide members extending between the drive platform and the base member, at least one of the drive platform and the base member being moveable along the guide members to increase or decrease the separation distance;
      at least one drive member operatively coupled between the drive platform and the base member; and
      a servo motor operatively coupled to the drive member such that as the servo motor drives the drive member, the separation distance is varied,
      the apparatus further including a tool assembly coupled to the tool feed unit and adapted to be engaged with the workpiece,
      wherein the drive platform has a first aperture disposed therethrough and the base member has a second aperture disposed therethrough, the first and second apertures being aligned along an axis, and the plurality of guide members and the at least one drive member being distributed around the first and second apertures, the apparatus further comprising a tool assembly that includes:
      a motor shaft extending along the axis and rotatably coupled to the drive platform;
      an armature winding disposed about at least a portion of the motor shaft; and
      a field assembly coupled to at least one of the drive platform and the base member and positioned proximate the armature winding.
(212) The apparatus of clause 211, further including:
   a controller operatively coupled to the servo motor; and
   a speed sensor operatively coupled to the motor shaft and to the controller, the controller being adapted to receive a feedback signal from the speed sensor and to transmit a control signal to the servo motor.

## Claims

1. An apparatus for performing a manufacturing operation on a workpiece (20), the apparatus comprising:
a base member (570);
a drive platform (572) spaced apart from the base member (570) by a separation distance;
a plurality of guide members (574) extending between the drive platform and the base member (570), at least one of the drive platform (572) and the base member (570) being moveable along the guide members (574) to increase or decrease the separation distance;
at least one drive member (554) operatively coupled between the drive platform (572) and the base member (570);
a servo motor (578) operatively coupled to the drive member (554) such that as the servo motor (578) drives the drive member (554), the separation distance is varied, and
a tool assembly (550) coupled to the drive platform (572),
**characterized in that** the drive platform (572) includes a first annular portion and the base member (570) includes a second annular portion, the first and second annular portions being aligned along an axis and the plurality of guide members (574) and the at least one drive member (554) being concentrically spaced about the first and second annular portions, and wherein the tool assembly (550) extends through the first and second annular portions along the axis.

2. The apparatus of Claim 1, wherein the tool assembly (530) includes:
a motor shaft (556) extending along the axis and rotatably coupled to at least one of the drive platform (572) and the base member (570);
an armature winding (558) disposed about at least a portion of the motor shaft (556); and
a field assembly (566) coupled to at least one of the drive platform (572) and the base member (570) and positioned proximate the armature winding (558).

3. The apparatus of Claim 1, wherein the drive platform (572) has a first aperture disposed therethrough and the base member (570) has a second aperture disposed therethrough, the first and second apertures being aligned along an axis, and the plurality of guide members (575) and the at least one drive member (554) being distributed around the first and second apertures, the apparatus further comprising a tool assembly (550) that includes:
a motor shaft (556) extending along the axis and rotatably coupled to the drive platform (572);
an armature winding (558) disposed about at least a portion of the motor shaft (556); and
a field assembly (566) coupled to at least one of the drive platform (572) and the base member (570) and positioned proximate the armature winding (558).

4. The apparatus of Claim 2 or 3, further including:
a controller operatively coupled to the servo motor (578); and
a speed sensor operatively coupled to the motor shaft (556) and to the controller, the controller being adapted to receive a feedback signal from the speed sensor and to transmit a control signal to the servo motor (578).

5. The apparatus of claim 1, comprising:
a track assembly (510) adapted to be attached to the workpiece;
a carriage assembly (520) moveably coupled to the track assembly and moveable relative to the workpiece; and
a tool feed unit coupled to the carriage assembly (520) and adapted to be coupled to a tool assembly and to controllably engage the tool assembly with the workpiece, the tool feed unit including:
said base member;
said drive platform spaced apart from the base member by said separation distance;
said plurality of guide members extending between the drive platform and the base member, at least one of the drive platform and the base member being moveable along the guide members to increase or decrease the separation distance;
said least one drive member operatively coupled between the drive platform and the base member; and
said servo motor operatively coupled to the drive member such that as the servo motor drives the drive member, the separation distance is varied.

6. The apparatus of Claim 5, further including a tool assembly coupled to the tool feed unit and adapted to be engaged with the workpiece (20).

7. The apparatus of Claim 6, further comprising a controller mounted on the carriage assembly and operatively coupled to the servo motor of the tool feed unit, and wherein the carriage assembly includes a drive assembly operable to translate the carriage assembly along the track assembly, the drive assembly being operatively coupled to the controller.

8. The apparatus of Claim 7, wherein the track assembly includes:
first and second elongate flexible rails, the rails being spaced apart and approximately parallel to each other; and
a plurality of vacuum attachment devices connected to each rail and spaced at intervals therealong for releasably attaching each rail to the surface of the workpiece by vacuum, with the widths of the rails extending substantially parallel to the surface of the workpiece, the rails bending and twisting as needed to substantially follow the surface of the workpiece.

9. The apparatus of Claim 8, wherein each rail is relatively stiff in bending about a first bending axis and relatively flexible in bending about a second bending axis orthogonal to the first bending axis, and wherein each rail is mounted on the workpiece such that the first bending axis is substantially normal to the workpiece surface and the second bending axis is substantially parallel to the workpiece surface.

10. A method of performing a manufacturing operation on a workpiece, the method comprising:
providing a tool feed unit having a base member moveably coupled to a drive platform by a plurality of guide members, at least one of the drive platform and the base member being moveable along the guide members to increase or decrease a separation distance therebetween, the tool feed unit including at least one drive member operatively coupled between the drive platform and the base member, a servo motor operatively coupled to the at least one drive member, and a tool assembly coupled to the drive platform;
operatively coupling a manufacturing tool to the tool feed unit; and
controllably rotating the at least one drive member using the servo motor to vary a separation distance between the drive platform and the base member and to engage the manufacturing tool with the workpiece,
**characterized in that** the drive platform includes a first annular portion and the base member includes a second annular portion, wherein the first and second annular portions are aligned along an axis and the plurality of guide members and the at least one drive member is concentrically spaced about the first and second annular portions, and wherein the tool assembly extends through the first and second annular portions along the axis.

11. The method of Claim 10, further comprising moveably supporting the feed unit proximate a surface of the workpiece.

12. The method of Claim 11 wherein moveably supporting the feed unit proximate a surface of the workpiece includes:
coupling a track assembly to the surface of the workpiece;
moveably coupling a carriage assembly to the track assembly; and
coupling the tool feed unit to the carriage assembly.

13. The method of Claim 12, wherein the coupling a track assembly to the surface of the workpiece includes applying vacuum to adhere the track assembly to the surface of the workpiece.

## Patentansprüche

1. Vorrichtung zum Durchführen einer Bearbeitungsoperation an einem Werkstück (20), wobei die Vorrichtung aufweist:
ein Basisglied (570);
eine Antriebsplattform (572), die um einen Trennabstand vom Basisglied (570) entfernt ist;
eine Vielzahl von Führungsgliedern (574), die sich zwischen der Antriebsplattform und dem Basisglied (570) erstrecken, wobei die Antriebsplattform (572) und/oder das Basisglied (570) entlang der Führungsglieder (574) beweglich sind, um den Trennabstand zu erhöhen oder zu verringern;
zumindest ein Antriebsglied (554), das betrieblich zwischen die Antriebsplattform (572) und das Basisglied (570) gekoppelt ist;
einen Servomotor(578), der betrieblich an das Antriebsglied (554) gekoppelt ist, so dass der Trennabstand verändert wird, wenn der Servomotor (578) das Antriebsglied (554) antreibt,
und
eine Werkzeuganordnung (550), die an die Antriebsplattform (572) gekoppelt ist, **dadurch gekennzeichnet, dass** die Antriebsplattform (572) einen ersten ringförmigen Abschnitt umfasst und dass das Basisglied (570) einen zweiten ringförmigen Abschnitt umfasst, wobei die ersten und zweiten ringförmigen Abschnitte entlang einer Achse ausgerichtet sind und wobei die Vielzahl der Führungsglieder (574) und das zumindest eine Antriebsglied (554) konzentrisch um die ersten und zweiten ringförmigen Abschnitte verteilt sind, und wobei sich die Werkzeuganordnung (550) durch die ersten und zweiten ringförmigen Abschnitte entlang der Achse erstreckt.

2. Vorrichtung nach Anspruch 1, wobei die Werkzeuganordnung (530) umfasst:
eine Motorwelle (556), die sich entlang der Achse erstreckt und die drehbar an die Antriebsplattform (572) oder das Basisglied (570) gekoppelt ist,
eine Ankerwicklung (558), die um zumindest einen Abschnitt der Motorwelle (556) angeordnet ist; und
eine Feldanordnung (566), die an die Antriebsplattform (572) und/oder das Basisglied (570) gekoppelt ist und die nahe der Ankerwicklung (558) positioniert ist.

3. Vorrichtung nach Anspruch 1, wobei die Antriebsplattform (572) eine erste Öffnung aufweist, die durch dieselbe angeordnet ist, und wobei das Basisglied (570) eine zweite Öffnung aufweist, die durch dasselbe angeordnet ist, wobei die ersten und zweiten Öffnungen entlang einer Achse ausgerichtet sind und wobei die Vielzahl der Führungsglieder (575) und das zumindest eine Antriebsglied (554) um die ersten und zweiten Öffnungen verteilt sind, wobei die Vorrichtung des Weiteren eine Werkzeuganordnung (550) aufweist, die umfasst:
eine Motorwelle (556), die sich entlang der Achse erstreckt und die drehbar an die Antriebsplattform (572) gekoppelt ist;
eine Ankerwicklung (558), die um zumindest einen Abschnitt der Motorwelle (556) angeordnet ist; und
eine Feldanordnung (566), die an die Antriebsplattform (572) und/oder das Basisglied (570) gekoppelt ist und die nahe der Ankerwicklung (558) positioniert ist.

4. Vorrichtung nach Anspruch 2 oder 3, die des Weiteren umfasst:
eine Steuerung, die betrieblich an den Servomotor (578) gekoppelt ist; und
einen Geschwindigkeitssensor, der betrieblich an die Motorwelle (556) und an die Steuerung gekoppelt ist, wobei die Steuerung angepasst ist, ein Rückkopplungssignal vom Geschwindigkeitssensor zu empfangen und ein Steuersignal an den Servomotor (578) zu übertragen.

5. Vorrichtung nach Anspruch 1, die aufweist:
eine Spuranordnung (510), die angepasst ist, am Werkstück angebracht zu werden;
eine Schlittenanordnung (520), die beweglich an die Spuranordnung gekoppelt ist und relativ zum Werkstück beweglich ist; und
eine Werkzeugzuführeinheit, die an die Schlittenanordnung (520) gekoppelt ist und angepasst ist, an eine Werkzeuganordnung gekoppelt zu werden und die Werkzeuganordnung kontrolliert mit dem Werkstück in Eingriff zu bringen, wobei die Werkzeugzuführeinheit aufweist:
das Basisglied;
die Antriebsplattform, die um den Trennabstand vom Basisglied entfernt ist;
die Vielzahl von Führungsgliedern, die sich zwischen der Antriebsplatform und dem Basisglied erstrecken, wobei die Antriebsplattform und/oder das Basisglied entlang der Führungsglieder beweglich sind, um den Trennabstand zu erhöhen oder zu verringern;
das zumindest eine Antriebsglied, das betrieblich zwischen die Antriebsplattform und das Basisglied gekoppelt ist; und
der Servomotor, der betrieblich an das Antriebsglied gekoppelt ist, so dass der Trennabstand verändert wird, wenn der Servomotor das Abtriebsglied antreibt.

6. Vorrichtung nach Anspruch 5, die des Weiteren eine Werkzeuganordnung umfasst, die an die Werkzeugzuführeinheit gekoppelt ist und die angepasst ist, mit dem Werkstück (20) in Eingriff zu kommen.

7. Vorrichtung nach Anspruch 6, die des Weiteren eine Steuerung aufweist, die auf die Schlittenanordnung montiert ist und die betrieblich an den Servomotor der Werkzeugzuführeinheit gekoppelt ist, und wobei die Schlittenanordnung eine Antriebsanordnung umfasst, die betrieblich ist, die Schlittenanordnung entlang der Spuranordnung zu bewegen, wobei die Antriebsanordnung betrieblich an die Steuerung gekoppelt ist.

8. Vorrichtung nach Anspruch 7, wobei die Spuranordnung umfasst:
erste und zweite gestreckte flexible Schienen, wobei die Schienen einen Abstand zueinander haben und annähernd parallel zueinander sind; und
eine Vielzahl von Vakuumbefestigungsvorrichtungen, die mit jeder Schiene verbunden und in Intervallen entlang denselben beabstandet sind, um jede Schiene mithilfe eines Vakuums an der Oberfläche des Werkstücks lösbar zu befestigen, wobei sich die Breiten der Schienen im Wesentlichen parallel zur Oberfläche des Werkstücks erstrecken, wobei sich die Schienen nach Bedarf biegen und drehen, um im Wesentlichen der Oberfläche des Werkstücks zu folgen.

9. Vorrichtung nach Anspruch 8, wobei jede Schiene vergleichsweise biegesteif um eine erste Biegeachse und vergleichsweise biegeflexibel um eine zweite Biegeachse ist, die orthogonal zur ersten Biegeachse orientiert ist, und wobei jede Schiene auf das Werkstück montiert ist, so dass die erste Biegeachse im Wesentlichen senkrecht zur Oberfläche des Werkstücks orientiert ist und die zweite Biegeachse im Wesentlichen parallel zur Oberfläche des Werkstücks orientiert ist.

10. Verfahren zur Durchführung einer Bearbeitungsoperation an einem Werkstück, wobei das Verfahren aufweist:
Bereitstellen einer Werkzeugzuführeinheit, die ein Basisglied aufweist, das über eine Vielzahl von Führungsgliedern beweglich an eine Antriebsplattform gekoppelt ist, wobei die Antriebsplattform und/oder das Basisglied entlang der Führungsglieder beweglich sind, um einen Trennabstand dazwischen zu erhöhen oder zu verringern, wobei die Werkzeugzuführeinheit zumindest ein Antriebsglied umfasst, das betrieblich zwischen die Antriebsplattform und das Basisglied gekoppelt ist, wobei ein Servomotor betrieblich an das zumindest eine Antriebsglied gekoppelt ist, und wobei eine Werkzeuganordnung an die Antriebsplattform gekoppelt ist;
betriebliches Koppeln eines Bearbeitungswerkzeugs an die Werkzeugzustelleinheit, und
kontrolliertes Drehen des zumindest einen Antriebsglieds unter Verwendung des Servomotors, um einen Trennabstand zwischen der Antriebsplattform und dem Basisglied zu verändern und um das Bearbeitungswerkzeug mit dem Werkstück in Eingriff zu bringen,
**dadurch gekennzeichnet, dass** die Antriebsplattform einen ersten ringförmigen Abschnitt umfasst und dass das Basisglied einen zweiten ringförmigen Abschnitt umfasst, wobei die ersten und zweiten ringförmigen Abschnitte entlang einer Achse ausgerichtet sind und wobei die Vielzahl der Führungsglieder und das zumindest eine Antriebsglied konzentrisch um die ersten und zweiten ringförmigen Abschnitte verteilt sind, und wobei sich die Werkzeuganordnung durch die ersten und zweiten ringförmigen Abschnitte entlang der Achse erstreckt.

11. Verfahren nach Anspruch 10, das des Weiteren aufweist: bewegliches Halten der Zuführeinheit nahe einer Oberfläche des Werkstücks.

12. Verfahren nach Anspruch 11, wobei ein bewegliches Halten der Zuführeinheit nahe einer Oberfläche des Werkstücks umfasst:
Koppeln einer Spuranordnung an die Oberfläche des Werkstücks;
bewegliches Koppeln einer Schlittenanordnung an die Spuranordnung; und
Koppeln der Werkzeugzuführeinheit an die Schlittenanordnung.

13. Verfahren nach Anspruch 12, wobei das Koppeln einer Spuranordnung an die Oberfläche des Werkstücks ein Anlegen eines Vakuums umfasst, um die Spuranordnung an die Oberfläche des Werkstücks zu haften.

## Revendications

1. Appareil pour effectuer une opération de fabrication sur une pièce (20), l'appareil comprenant :
un organe de base (570) ;
une plate-forme d'entraînement (572) espacée de l'organe de base (570) d'une distance de séparation ;
une pluralité d'organes de guidage (574) s'étendant entre la plate-forme d'entraînement et l'organe de base (570), au moins l'un de la plate-forme d'entraînement (572) et de l'organe de base (570) pouvant être déplacé le long des organes de guidage (574) pour augmenter ou diminuer la distance de séparation ;
au moins un organe d'entraînement (554) accouplé fonctionnellement entre la plate-forme d'entraînement (572) et l'organe de base (570) ;
un servomoteur (578) accouplé fonctionnellement à l'organe d'entraînement (554) de telle sorte que la distance de séparation soit modifiée à mesure que le servomoteur (578) entraîne l'organe d'entraînement (554), et
un ensemble d'outil (550) accouplé à la plate-forme d'entraînement (572), **caractérisé en ce que** la plate-forme d'entraînement (572) comporte une première portion annulaire et l'organe de base (570) comporte une deuxième portion annulaire, la première et la deuxième portion annulaire étant alignées le long d'un axe et la pluralité d'organes de guidage (574) et l'au moins un organe d'entraînement (554) étant espacés concentriquement autour de la première et de la deuxième portion annulaire et l'ensemble d'outil (550) s'étendant à travers la première et la deuxième portion annulaire le long de l'axe.

2. Appareil selon la revendication 1, dans lequel l'ensemble d'outil (530) comporte :
un arbre de moteur (556) s'étendant le long de l'axe et accouplé à rotation à au moins l'un de la plate-forme d'entraînement (572) et de l'organe de base (570) ;
un enroulement d'armature (558) disposé autour d'au moins une portion de l'arbre de moteur (556) ; et
un ensemble de champ (566) accouplé à au moins l'un de la plate-forme d'entraînement (572) et de l'organe de base (570) et positionné à proximité de l'enroulement d'armature (558).

3. Appareil selon la revendication 1, dans lequel la plate-forme d'entraînement (572) présente une première ouverture disposée à travers elle et l'organe de base (570) présente une deuxième ouverture disposée à travers lui, la première et la deuxième ouverture étant alignées le long d'un axe, et la pluralité d'organes de guidage (575) et l'au moins un organe d'entraînement (554) étant répartis autour de la première et de la deuxième ouverture, l'appareil comprenant en outre un ensemble d'outil (550) qui comporte :
un arbre de moteur (556) s'étendant le long de l'axe et accouplé à rotation à la plate-forme d'entraînement (572) ;
un enroulement d'armature (558) disposé autour d'au moins une portion de l'arbre de moteur (556) ; et
un ensemble de champ (566) accouplé à au moins l'un de la plate-forme d'entraînement (572) et de l'organe de base (570) et positionné à proximité de l'enroulement d'armature (558).

4. Appareil selon la revendication 2 ou 3, comportant en outre :
un dispositif de commande accouplé fonctionnellement au servomoteur (578) ; et
un capteur de vitesse accouplé fonctionnellement à l'arbre de moteur (556) et au dispositif de commande, le dispositif de commande étant prévu pour recevoir un signal de rétroaction provenant du capteur de vitesses et pour transmettre un signal de commande au servomoteur (578).

5. Appareil selon la revendication 1, comprenant :
un ensemble de glissière (510) prévu pour être attaché à la pièce ;
un ensemble de chariot (520) accouplé de manière déplaçable à l'ensemble de glissière et pouvant être déplacé par rapport à la pièce ; et
une unité d'alimentation d'outil accouplée à l'ensemble de chariot (520) et prévue pour être accouplée à un ensemble d'outil et pour engager de manière commandable l'ensemble d'outil avec la pièce, l'unité d'afimentaüon d'outil comportant
ledit organe de base ;
ladite plate-forme d'entraînement espacée de l'organe de base de ladite distance de séparation ;
ladite pluralité d'organes de guidage s'étendant entre la plate-forme d'entraînement et l'organe de base, au moins l'un de la plate-forme d'entraînement et de l'organe de base pouvant être déplacé le long des organes de guidage pour augmenter ou diminuer la distance de séparation ;
ledit au moins un organe d'entraînement étant accouplé fonctionnellement entre la plate-forme d'entraînement et l'organe de base ; et
ledit servomoteur étant accouplé fonctionnellement à l'organe d'entraînement de telle sorte que la distance de séparation soit modifiée à mesure que le servomoteur entraîne l'organe d'entraînement.

6. Appareil selon la revendication 5, comportant en outre un ensemble d'outil accouplé à l'unité d'alimentation d'outil et prévu pour être engagé avec la pièce (20).

7. Appareil selon la revendication 6, comprenant en outre un dispositif de commande monté sur l'ensemble de chariot et accouplé fonctionnellement au servomoteur de l'unité d'alimentation d'outil, et dans lequel l'ensemble de chariot comporte un ensemble d'entraînement apte à déplacer en translation l'ensemble de chariot le long de l'ensemble de glissière, l'ensemble d'entraînement étant accouplé fonctionnellement au dispositif de commande.

8. Appareil selon la revendication 7, dans lequel l'ensemble de glissière comporte :
des premier et deuxième rails flexibles allongés, les rails étant espacés et approximativement parallèles l'un à !'astre ; et
une pluralité de dispositifs de fixation par aspiration connectés à chaque rail et espacés à intervalle le long de celui-ci pour attacher de manière amovible chaque rail à la surface de la pièce par aspiration, les largeurs des rails s'étendant substantiellement parallèlement à la surface de la pièce, les rails fléchissant et se tordant au besoin pour suivre substantiellement la surface de la pièce.

9. Appareil selon la revendication 8, dans lequel chaque rail est relativement rigide en flexion autour d'un premier axe de flexion et relativement flexible en flexion autour d'un deuxième axe de flexion perpendiculaire au premier axe de flexion, et dans lequel chaque rail est monté sur la pièce de telle sorte que le premier axe de flexion soit substantiellement perpendiculaire à la surface de la pièce et que le deuxième axe de flexion soit substantiellement parallèle à la surface de la pièce.

10. Procédé pour effectuer une opération de fabrication sur une pièce, le procédé comprenant :
fournir une unité d'alimentation d'outil ayant un organe de base accouplé de manière déplaçable à une plate-forme d'entraînement par une pluralité d'organes de guidage, au moins l'un de la plate-forme d'entraînement et de l'organe de base pouvant être déplacé le long des organes de guidage pour augmenter ou diminuer une distance de séparation entre eux, l'unité d'alimentation d'outil comportant au moins un organe d'entraînement accouplé fonctionnellement entre la plate-forme d'entraînement et l'organe de base, un servomoteur accouplé fonctionnellement à l'au moins un organe d'entraînement et un ensemble d'outil accouplé à la plate-forme d'entraînement ;
accoupler fonctionnellement un outil de fabrication à l'unité d'alimentation d'outil ; et
faire tourner de manière commandable l'au moins un organe d'entraînement en utilisant le servomoteur pour faire varier une distance de séparation entre la plate-forme d'entraînement et l'organe de base et pour engager l'outil de fabrication avec la pièce,
**caractérisé en ce que** la plate-forme d'entraînement comporte une première portion annulaire et l'organe de base comporte une deuxième portion annulaire, la première et la deuxième portion annulaire étant alignées le long d'un axe de la pluralité d'organes de guidage et l'au moins un organe d'entraînement étant espacé concentriquement autour de la première et de la deuxième portion annulaire, et l'ensemble d'outil s'étendant à travers la première et la deuxième portion annulaire le long de l'axe.

11. Procédé selon la revendication 10, comprenant en outre le support déplaçable de l'unité d'alimentation à proximité d'une surface de la pièce.

12. Procédé selon la revendication 11, dans lequel le support déplaçable de l'unité d'alimentation à proximité d'une surface de la pièce comporte :
accoupler un ensemble de glissière à la surface de la piéce ;
accoupler de manière déplaçable un ensemble de chariot à l'ensemble de glissière ; et
accoupler l'unité d'alimentation d'outil à l'ensemble de chariot.

13. Procédé selon la revendication 12, dans lequel l'accouplement d'un ensemble de glissière à la surface de la pièce comporte l'application d'un vide pour faire adhérer l'ensemble de glissière à la surface de la pièce.
